Europäisches Patentamt

European Patent Office

Office européen des brevets

(19)

(11) Publication number: **0 181 375 B1**

(12)
# EUROPEAN PATENT SPECIFICATION
## published in accordance with Art. 158(3) EPC

(45) Date of publication of patent specification: **20.03.91**   (51) Int. Cl.⁵: **F25B 17/04, F25B 17/08**

(21) Application number: **85902379.8**

(22) Date of filing: **30.04.85**

(86) International application number:
**PCT/US85/00783**

(87) International publication number:
**WO 85/05170 (21.11.85 85/25)**

(54) **HEAT PUMP ENERGIZED BY LOW-GRADE HEAT SOURCE.**

(30) Priority: **01.05.84 US 605812**

(43) Date of publication of application:
**21.05.86 Bulletin 86/21**

(45) Publication of the grant of the patent:
**20.03.91 Bulletin 91/12**

(84) Designated Contracting States:
**CH DE FR GB IT LI NL SE**

(56) References cited:

| | |
|---|---|
| DE-C- 636 013 | FR-A- 2 036 462 |
| FR-A- 2 342 471 | FR-A- 2 465 970 |
| FR-A- 2 539 854 | US-A- 1 790 757 |
| US-A- 1 833 901 | US-A- 1 881 208 |
| US-A- 4 121 432 | US-A- 4 138 850 |
| US-A- 4 165 952 | US-A- 4 183 227 |
| US-A- 4 187 688 | US-A- 4 224 803 |
| US-A-42 021 79 | US-A-42 032 98 |
| US-A-42 317 72 | |

(73) Proprietor: **TCHERNEV, Dimiter I.**
**32 Shadow Oak Drive**
**Sudbury, MA 01776(US)**

(72) Inventor: **TCHERNEV, Dimiter I.**
**32 Shadow Oak Drive**
**Sudbury, MA 01776(US)**

(74) Representative: **Knott, Stephen Gilbert et al**
**MATHISEN, MACARA & CO. The Coach**
**House 6-8 Swakeleys Road**
**Ickenham Uxbridge Middlesex UB10 8BZ(GB)**

## Description

The present invention relates to a heat pump apparatus incorporating at least two energy converters. The apparatus is particularly adapted to the use of low-grade energy sources such as air heated by the combustion of gas, oil, exhaust gases, geothermal fluids, waste gases and solar energy. A heat pump apparatus embodying the invention is capable of providing both heat and cooling for a space such as a building.

For over forty years, residential and small commercial buildings have been cooled almost exclusively by electrically driven compressor air conditioning units. The primary reasons for this are: (1) the relatively low initial cost of the equipment; (2) a high coefficient of performance, usually two to three, which, together, with dependability and long equipment liftime provides low operating costs; and (3) the use of air-cooled condensers and evaporators which reduces the system's complexity and costs. The coefficient of performance (COP) equals refrigerant effect (Q) divided by net work input (W). This may be expressed as COP = Q/W where "Q" is the heat C. absorbed by the unit per mass refrigerant and "W" is the work supplied to the unit by the compressor.

Existing gas-fired cooling systems generally have on the other hand: (1) a low coefficient of performance, usually less than 0.7 and therefore relatively high operating costs; (2) the need for a cooling tower to serve for the purposes of the condenser which increases the initial and operating cost of the system; and (3) usually require the use of corrosive substances such as ammonia or lithium bromide solutions that reduce equipment lifetime and increase maintenance and operating costs.

As a result, whereas the residential market for gas is substantial in the winter and when heating is otherwise required, it is not significant in the cooling season. This contributes to poor utilization of distribution and storage capacities of the gas and liquid fuel industries as well as for the electric utilities.

With the introduction of electrically driven heat pumps which have a coefficient of performance of three to four and are capable of both heating and cooling, it can be anticipated that the efficient distribution of gas and liquid fuel from producer to consumer will be further eroded. If this is not to occur, a gas-energized cooling system must be provided which is realistically competitive with conventional existing air-conditioning systems for relatively small buildings. If such a system is to be competitive, it must have a coefficient of performance reasonably competitive with that of the electrically driven heat pump and otherwise be competitive which means that it will have the same low initial equipment costs, long equipment lifetime and dependability of conventional heating and cooling systems, or better.

The coefficient of performance of gas fired cooling systems may be increased by utilizing the heat of combustion in a two-stage adsorption system. Unfortunately, due to the complexity of such systems including the need for a cooling tower, the initial investment and operating and maintenance requirements are not as a practical matter compatible with residential and small building heating and cooling needs.

Improvements in the efficiency of energy intensive systems can often be gained through the use of energy recycling methods. The principle of energy recycling is old and has been used in practical applications since at least the 1920's. The device employed for this purpose is usually called a regenerator and is used extensively in combination with gas turbines in large power plants. A regenerator may be a rotor having cylindrical heat transfer packing through which hot and cold gases are passed. Heat temporarily stored in such packing from the hot gas is transferred into the cold gas stream by steadily rotating the cylindrical body which temporarily stores the thermal energy. Fixed two-bed regenerator systems are also known. Fixed two-bed systems comprise two containers of heat storage material wherein the storage and recovery of heat is accomplished by the reversal of gas flow in the fixed-bed system. The closing and opening of relevant valves controlling the hot/cold gas allows the start of the flow of the cold/hot gas through the packing. With the two-bed regenerator system, one of the regenerators is, at any instant, preheating the cold gas while the other bed is cooling the hot gas. Regenerators are common in glass making furnaces where they must be able to withstand entrance gas temperatures on the order of 1600° C. The state of the art on existing commercial devices used for the recycling of energy may be found in "Thermal Energy Storage and Regeneration" by Schmidt and Willmott, published in 1981 by Hemisphere Publishing Corporation, McGraw-Hill. Attention is also invited to U.S. Patent No. 4,183,227, which discloses an apparatus and process according to the first part of claims 1 and 19 resp.

According to a first aspect of the present invention there is provided, a heat pump apparatus comprising, at least two separate hermetically-sealed solid-gas adsorption systems each containing a working refrigerant and heat exchange means connecting said systems and including conduit means received in each system for the passage of a heat exchange fluid therethrough in heat exchange relationship with the adsorbent material, which is in engagement with said conduit means in each system, said connection of said systems by said heat exchange means being arranged so that heat generated during the adsorption cycle of one said system is transferred through said heat exchange means and is used as part of the input energy required in the desorption cycle of the other said system, whereby the need for external energy input for said desorption is greatly reduced, characterised in that, said conduit means is arranged with respect to at least one of said systems so as to be in immediate thermally conductive relationship with said adsorbent material which is disposed along the conduit means and is so dimensioned and configured that the transmission of thermal energy by the adsorbent material in a direction transverse to the conduit means occurs more rapidly than the transmission of thermal energy by the adsorbent material along the conduit means thereby creating a propagating temperaturefront which advances through the adsorbent material, during each operating cycle, in the direction of flow of said heat exchange fluid through the conduit, the propagating temperature front presenting a temperature transition, the temperature of heat exchange fluid on the upstream side of the temperature front being significantly different from the temperature of heat exchange fluid on the downstream side of the temperature front, and the propagating temperature front causing the working refrigerant to be adsorbed by or desorbed from the adsorbent material, such that the movement of working refrigerant into or out of the adsorbent material advances through the adsorbent material in the same direction as the flow of the heat exchange fluid in the conduit means.

The apparatus may provide continuous refrigeration and/or heating from a single low-grade heat source.

The heat exchange conduit means may comprise a metal conduit for said fluid having an effective wall thickness of 0.5 millimetres or less, the volumetric thermal conductivity of said solid adsorbent being substantially less than said conduit, said solid adsorbent comprises slices disposed along said conduit in immediate thermal communication therewith, the slices having a thickness of not more than ten millimetres, said conduit and said solid adsorbent thereon being so arranged that a heat transfer takes place between the fluid flowing in said conduit and said solid adsorbent such that when said fluid and said solid adsorbent have different initial temperatures these initial different temperatures are maintained across a propagating temperature front which is propagated along said solid adsorbent in the direction of fluid flow, the temperature of the solid adsorbent behind said front being about the same as said fluid behind said front, and the temperature of the solid adsorbent remaining at about its initial temperature forward of said front.

According to a further aspect, the invention provides a process for heating and cooling an interior space using a low-grade heat source, comprising the steps of:

I. Providing first and second sealed enclosures each containing a working refrigerant, a solid adsorbent material capable of adsorbing said refrigerant exothermally, and a conduit which extends through the enclosure in thermal communication with said adsorbent material and which conducts a heat transfer fluid therethrough;

II. Providing a low-grade heat source in thermal communication with said conduits of said enclosures;

III. Raising the vapour pressure of said refrigerant in the first of said enclosures and desorbing the refrigerant from said adsorbent material therein using said heat transfer fluid heated by said low-grade heat source;

IV. Allowing refrigerant vapour in said first enclosure to be received by a condenser wherein said refrigerant vapour is condensed, and transferring said refrigerant's heat of condensation to said internal space or to the atmosphere;

V. Lowering the vapour pressure of said refrigerant in the second of said enclosures by adsorbing said refrigerant in said adsorbent material, and transferring the heat of adsorption thereby generated to said first enclosure in combination with heat from said low-grade heat source, via said heat transfer fluid in said conduits;

VI. Allowing refrigerant condensate in said second enclosure to be received by an evaporator wherein said condensate is evaporated and transferring said refrigerant's heat of vaporization to said internal space or to atmosphere, and

VII. Repeating steps III, IV, V and VI with said enclosures interchanged upon substantial completion of the respective adsorption and desorption cycles therein characterised in that, the solid adsorbent material provided in step I is so dimensioned and configured in relation to said conduit means that the transmission of thermal energy by the adsorbent material in a direction transverse to the conduit means occurs more rapidly than the transmission of thermal energy by the adsorbent material along the conduit means so that during the desorption step III in each enclosure the temperature of the adsorbent material is raised along a propagating temperature front which progresses through the material as a result of the passage of said heat transfer fluid along the conduit means, the temperature front presenting a temperature transition, the temperature of said heat exchange fluid on the upstream side of the temperature front being significantly different from the temperature of said heat exchange fluid on the downstream side of the temperature front, whereby working refrigerant is desorbed from the adsorbent material along the propagating temperature front, and so that during the adsorption step V in each enclosure the temperature of the adsorbent material is lowered along a propagating temperature front which progresses through the material as a result of the passage of heat transfer fluid along the conduit means, the temperature front presenting a temperature transition, the temperature of said heat exchange fluid on the upstream side of the temperature front being significantly different from the temperature of said heat exchange fluid on the downstream side of the temperature front, whereby working refrigerant is adsorbed by the adsorbent material along the propagating temperature front, and the movement of working refrigerant into or out of the adsorbent material, due to adsorption or desorption respectively, advances through the adsorbent material in the same direction as the flow of heat exchange fluid along the conduit means.

In preferred embodiments, the instant invention provides an adsorption system heat pump, preferably gas fired, which has a cooling coefficient of performance of at least one and possibly as high as two and a heating coefficient of performance of two or more, depending on the specific cooling and heating requirements and available energy, such coefficient approaching the system's Carnot efficiency which, in terms of the coefficient of performance, is three to four. This is an increase of two to three times the presently obtainable values with single-stage adsorption or absorption systems and approaches the efficiency of electrically driven heat pumps which are burdened by significantly higher power costs.

The preferred adsorption system heat pump is, moreover, simple in design and has a relatively low initial cost and long lifetime with little or no maintenance.

Of course, an increased coefficient of performance can be obtained in known systems with two-stage adsorption systems. However, the complexity of such a modified system is increased considerably and the need for a cooling tower is not eliminated. Accordingly, two-state systems are not generally suitable for relatively small installations due to their substantially greater initial equipment costs as well as their operating and maintenance costs.

It is known to use zeolite as an adsorbent material, as disclosed in U.S.Patent No.4,034,569 of July 12, 1977 and U.S. Patent No. 4,138,850 of February 13, 1979. The preferred heat pump apparatus also utilizes zeolite as an adsorbent for a refrigerant gas. However, in contrast to earlier heat pump systems in which the emphasis has been on cooling, the preferred form of the present invention is a heat pump which is capable of providing both heating and cooling and employs two energy converter units. One unit can be desorbing while the other unit is adsorbing, the thermal energy from the adsorbing zeolite being used in part to heat the desorbing zeolite. In addition, the inventive heat pump employs the development of a temperature front which propagates through the metal-zeolite heat exchanger. The creation of a temperature front permits reuse of as much as ninety percent of the thermal energy available during the sorption processes. The use of zeolite as the adsorbent, two energy converters with heat exchange and the propagating temperature front through the heat exchanger, results in the coefficient of performance obtained by the apparatus and process approaching the theoretical Carnot efficiency of three to four. In other words, the preferred gas-fired zeolite heat pump embodying the instant invention is substantially as efficient as an electrical heat pump having, however, the further advantage of markedly reduced operation costs.

Although natural gas or oil or any gaseous or liquid fuel which produces hot gases of combustion may be used for the system, it also may employ the waste heat generated by the internal combustion engine or any other source of hot gas or liquid which provides a temperature in the range of 250° F (120° to 205° C). For example, there are various types of solar collectors which can generate temperatures up to 600° F (315° C). There is also a need in various manufacturing and process plants to dissipate waste heat which could be used as the heat-energy source for the instant invention. As a general proposition, any fluid source at temperatures higher than those required can be thermally diluted through a number of mechanisms by further fluid having a cooler temperature and this may or may not involve intermixing of fluids. With natural gas or oil, the ultimate temperature is, in fact, lowered by direct intermixing of outside air with the gases of combustion to provide the fluid temperature desired. Accordingly, although the ultimate heat source may not be "low-grade", by the intermixing of other fluids, it is converted into the equivalent of a low-grade heat source. For the purposes of this specification, a low-grade heat source is considered any heat source reasonably compatible with the system wherein an effective heat differential can be provided, the maximum requisite differential being less than roughly 200 deg.C or 360 deg.F.

The preferred adsorbent is a zeolite, either natural or artificial, although the natural zeolites are preferred. Operable natural zeolites include chabazite, clinoptilolite, modernite, erionite and others. An acceptable synthetic zeolite is manufactured by Union Carbide and is known as Linde molecular sieve type 13X. Various molecular sieve zeolites are described in U.S. Patent Nos. 2,882,243; 2,882,244; 3,012,853; 3,130,007; 3,181,231; 3,329,629; 3,720,756; 3,808,326; 3,941,871; 3,969,276; 3,972,983; 3,976,598; 3,979,335; 4,016,245; 4,034,065, and 4,046,859.

The publication "Natural Zeolites, Occurrence, Properties, Use" edited by L.B. Sand and F.A. Mumpton, Peragamon Press, provides considerable information on various types of natural zeolites. Zeolites are molecular sieves which in their dehydrated state comprise crystals interlaced with regularly spaced channels of molecular dimensions. This network of uniform channels or pores comprises almost fifty percent of the total volume in the crystals. Empty cavities of such molecular sieves have a strong tendency to capture water molecules. The interaction of the dipole or quadrupole moment of gas molecules with the non-uniform electric fields generated in the crystalline structure of the zeolite, is strong and nonlinear.

In the preferred embodiment of the invention, at least two energy converters are contained in respective separate sealed containers so that when the heat pump is energized one of the energy converters or containers is always in the desorption part of the cycle. The use of two separate zeolite containers allows for the exchange of thermal energy from the container being cooled which is in the adsorption part of the cycle to the container being heated which is in the desorption part of the cycle. This results in a system which can provide an extremely high coefficient of performance. If only about thirty percent of the energy is exchanged, the heating coefficient of the cycle increases from about 0.7 to above one and the heating coefficient of performance is increased to above two. If sixty-five percent of the energy is recycled, the cooling coefficient of performance increases to two and the heating coefficient of performance increases to about three.

It is to be emphasized that since the system is cyclic and maximum efficiency is obtained by continuous recycling of the energy converters, the advantages of continuous operation suggest greater efficiency may be obtained in a typical heating system with the utilization of more than two energy converters whereby periodic complete shut-off of the system is avoided. Thus, although the system described herein has only two energy converters, it will be understood by those skilled in the art that further converters may be added to the system in various arrangements.

The invention is capable of providing a gas adsorption heat pump with significantly increased coefficient of performance in both its heating and cooling modes whereby it is economically competitive with electrically driven heat pumps.

In order that the invention may be better understood, several preferred embodiments of the invention will now be described, by way of example only, with reference to the accompanying schematic drawings, wherein:

Figure 1 is a diagram showing the amount of water adsorbed by a zeolite molecular sieve at various temperature and absolute pressures of water vapor measured in millimeters of mercury;

Figure 2 is a diagram similar to Figure 1 except it shows the amount of water adsorbed by lithium bromide at various temperatures and absolute water vapor pressures measured in millimeters of mercury;

Fig. 3 illustrates schematically a simplified concept of the zeolite cycle in accordance with the instant invention;

Fig. 4 is a diagram which discloses equilibrium loading of water as to pounds of adsorbed water in 100 pounds of activated zeolite molecular sieve, type Linde 13X, showing specifically the cycle of desorption and adsorption of water vapor in the instant invention;

Fig. 5 is a diagram which illustrates the temperature-time profile of a conventional zeolite heat exchanger;

Fig. 6 is a diagram which illustrates the temperature-time profile of the zeolite heat exchanger system in accordance with the instant invention;

Fig. 7 is a graph which shows time duration solutions to the heat flow equation for zeolites of various thicknesses to obtain the profile shown in Fig. 6;

Fig. 8 is a schematic of energy converters in accordance with the instant invention incorporated into the heating and cooling system of a building;

Fig. 9 illustrates an embodiment in a partial section elevational view wherein two energy converters are within a single pressure container;

Fig. 10 is a sectional plan view of the container and energy converters shown in Fig. 9;

Fig. 11 illustrates diagramatically a gas burner which is employed with the container and energy converters shown in Figs. 9 and 10;

Fig. 12 is a bottom plan view of a packet or tile containing zeolite which is received by the fluid passageways for combustion and cooling gases in Fig. 9;

Fig. 13 is a top plan view of the packet shown in Fig. 12;

Fig. 14 is a schematic similar to Fig. 3 of a further zeolite cycle in accordance with the invention for the heating mode;

Fig. 15 shows the actual output temperature of a heat exchanger with time for different lengths of heat exchanger;

Fig. 16 is similar to Figs. 5 and 6 showing actual performance wherein 70 percent energy is cycled between two containers;

Fig. 17 is a graph showing measured performance of zeolite in desorbing water vapor for different thicknesses of zeolite;

Fig. 18 is a perspective view in partial section showing zeolite bricks or tiles enclosed in a copper foil envelope as utilized to generate the data shown in Fig. 17;

Fig. 19 illustrates the gas/fluid flow around a copper flow envelope as shown in Fig. 18 wherein the envelopes are in parallel;

Fig. 20 is similar to Fig. 19 except that it discloses the zeolite envelopes in series for the gas/fluid flow.

Fig. 21 illustrates a variation of a gas/fluid flow system designed particularly for liquid fluids;

Fig. 22 is a diagrammatic representation which illustrates a system that uses a liquid for heating and cooling the zeolite;

Fig. 23 is a broken cross-section of the heat exchanger cylindrical wall for the system shown in Fig. 22;

Fig. 24 is a cross-section of a further heat exchanger cylindrical wall which is an alternative to that shown in Fig. 23;

Fig. 25 shows a converter of the type illustrated in Fig. 22 in a condensate return loop;

Fig. 26 discloses the other converter for a system such as shown in Fig. 22 which is cut-a-way to illustrate the heat exchanger cylinders and a ring manifold for trickle evaporation;

Fig. 27 illustrates a pair of converters having a condensate return loop crossover; and

Fig. 28 is a schematic similar to Figs. 3 and 14 which illustrates exterior water loops for the systems otherwise illustrated in Figs. 21-27.

## Description of the Preferred Embodiments

As indicated above, zeolites form a family of materials with a unique, open, cage-like crystalline structure. Their atomic structure is such that cavities interconnected by channels or tunnels are formed on an atomic scale. There are over thirty types of zeolites with cavity sizes ranging from three to over ten angstroms and connecting channels of various sizes.

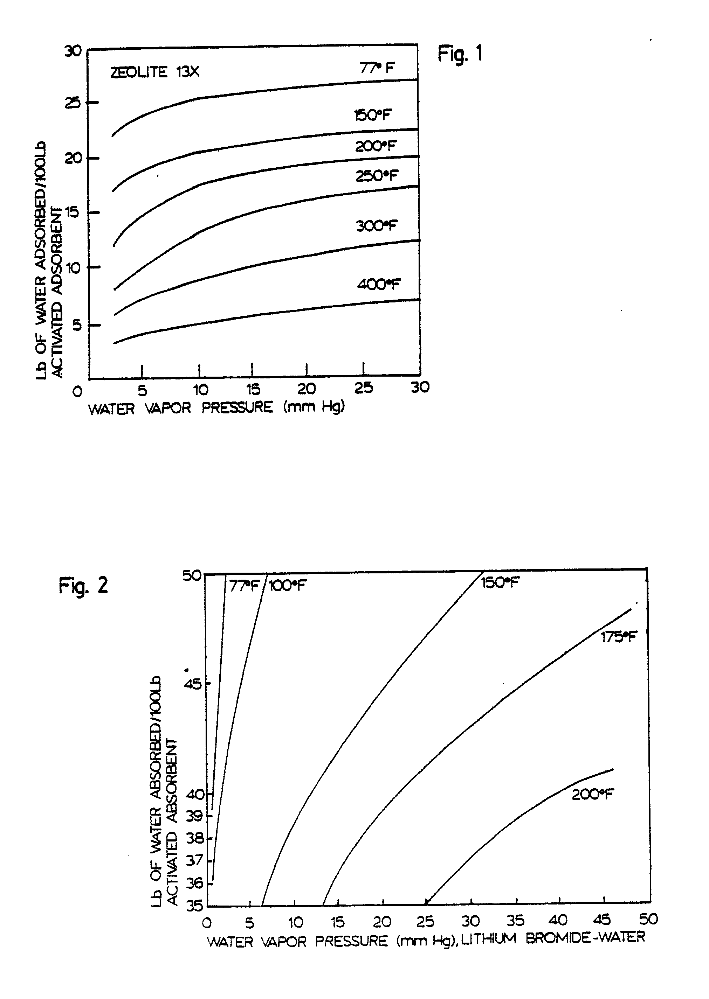

Because of this open porous structure, zeolites are capable of adsorbing large amounts of a variety of refrigerant gases ranging from water vapor, ammonia and carbon dioxide to different fluorocarbons, chlorocarbons and hydrocarbons at near room temperatures. The strong non-uniform internal electric fields which occur at the atomic level in the zeolite structure in interaction with the polar moments of gas molecules results in an adsorption energy. The interaction is extremely nonlinear and exhibits saturation behavior in its pressure dependence. Fig. 1 presents the adsorption isotherms of water vapor and zeolite. Fig. 2 presents comparable adsorption isotherms for a lithium bromide water system. The non-linearity and saturation behavior of zeolites is obvious and at pressures above ten millimeters mercury absolute, the adsorbed amount is almost independent of pressure and entirely dependent on temperature.

The solubility of ammonia in water, of water vapor in lithium bromide and the adsorption of refrigerant gases on surface adsorbents such as silica gel, activated alumina and activated carbon depend exponentially on $\Delta k/RT$ where $\Delta H$ is the energy of solution of adsorption and $T$ is the absolute temperature and $R$ is the gas constant. In other words, they obey the Arrhenius equation. Adsorption in zeolites, in contrast, are shown by Dubinin (M.M. Dubinin & V.A. Astakov, "Molecular Sieve Zeolites -- II", American Chemical Society, Washington, D.C. 1971, pp. 69-85) to depend exponentially on at least the second and as high as the fifth power of $\Delta H/RT$. This extreme non-linearity of thermoactivation makes zeolites well suited for heat pump applications by reducing the influence of condensation pressure and temperature on the coefficient of performance of the cycle.

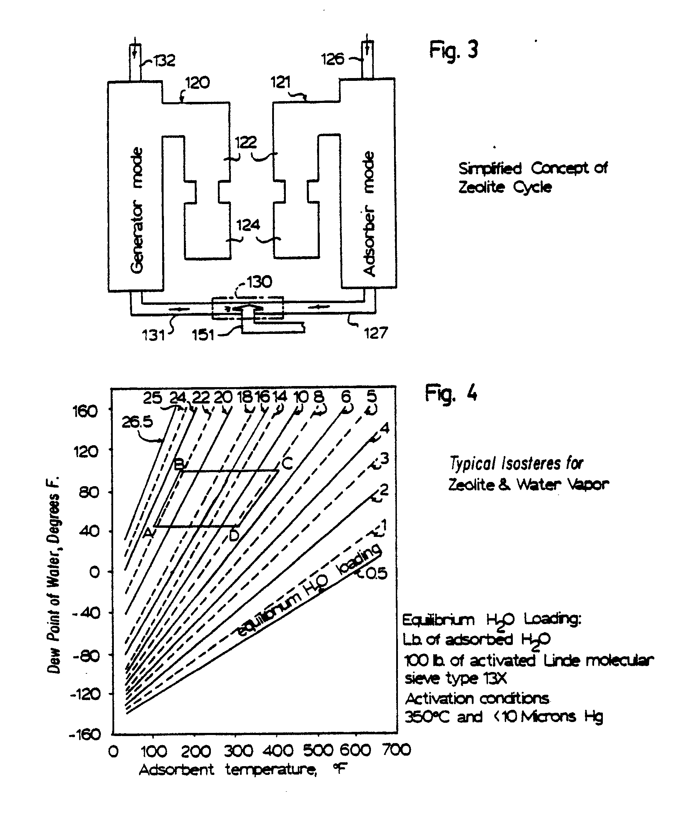

The concept of the zeolite cycle of the instant invention is shown schematically in Fig. 3. The zeolite is divided into two separate hermetically sealed spaces, enclosures or containers of energy converters designated generally by reference numerals 120 and 121. Each space is provided with its own condenser 122 and its own evaporator 124 which can in fact be a single structure as will be explained hereinbelow.

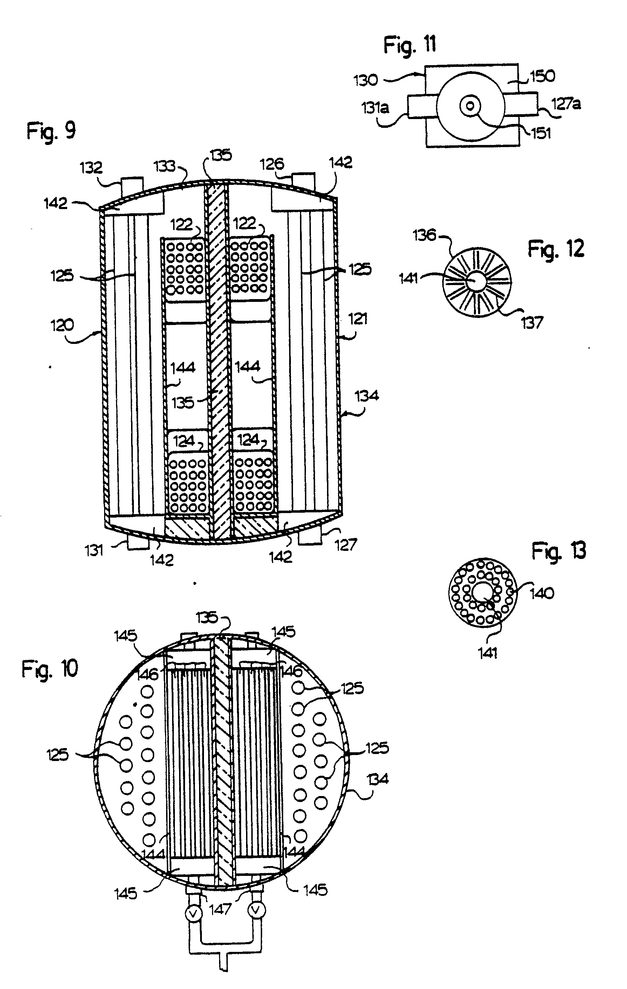

In Fig. 3, converter 120 is in the generator mode whereas converter 121 is in the adsorber mode. Both converters 120 and 121 have extending vertically therethrough a plurality of heat exchange fluid conduits 125 (see Figs. 9 and 10). Such conduits are surrounded by zeolite adsorbent in a manner to be subsequently described. When heat exchange fluid enters, it is received by the conduits 125 (Fig. 9) and is preheated by the heat in the zeolite and structure of converter 121, such heat having been provided when converter 121 was in its previous generator mode. The zeolite and associated structure in converter 121 cool slowly and as the zeolite cools, it adsorbs refrigerant vapor from the converter's evaporator 124. The evaporation of refrigerant at the evaporator provides cooling which may be employed to cool a building or rejected to the atmosphere. The generated heat of adsorption plus the specific heat of the zeolite and associated structure in converter 121 increases the temperature of the heat exchange fluid passing through conduits 125 to a temperature which is decreasing in time but remains above about 100°F (38°C). Thus heat exchange fluid enters from inlet conduit 126 and travels through conduits 125 and exits the converter 121 through a bottom conduit 127. Heat exchange fluid from bottom conduit 127 passes through a heating station 130 (Fig. 3) which comprises a source of heat such as a burner 151 that provides a gas flame to heat the heat exchange fluid. The heat exchange fluid is conveyed through a further bottom conduit 131 of converter 120 and into its fluid conduit 125 wherein the heated heat exchange fluid heats the zeolite causing it to desorb. The gas combustion is controlled, as necessary, by means well known in the art to heat and maintain for the part of the cycle, the heat exchange fluid in conduit 131 at about 400°F (205°C) before it enters conduit 125 in converter 120. Here, the zeolite which has been cooled to about 95°F (35°C) during the previous cycle is heated to the temperature of about 400°F (205°C). As it is heated, the refrigerant gas is desorbed and pressure in the converter 120 increases so that the desorbed vapor can be condensed at a relatively high temperature (about 100°F (38°C)). The heat of condensation which takes place in the condenser 122 of converter 120 is rejected to the outside air or to a heat sink or is used, in part, for heating needs such as heating water during the cooling season. During the heating season, however, the heat is used to provide part or all of the heating load.

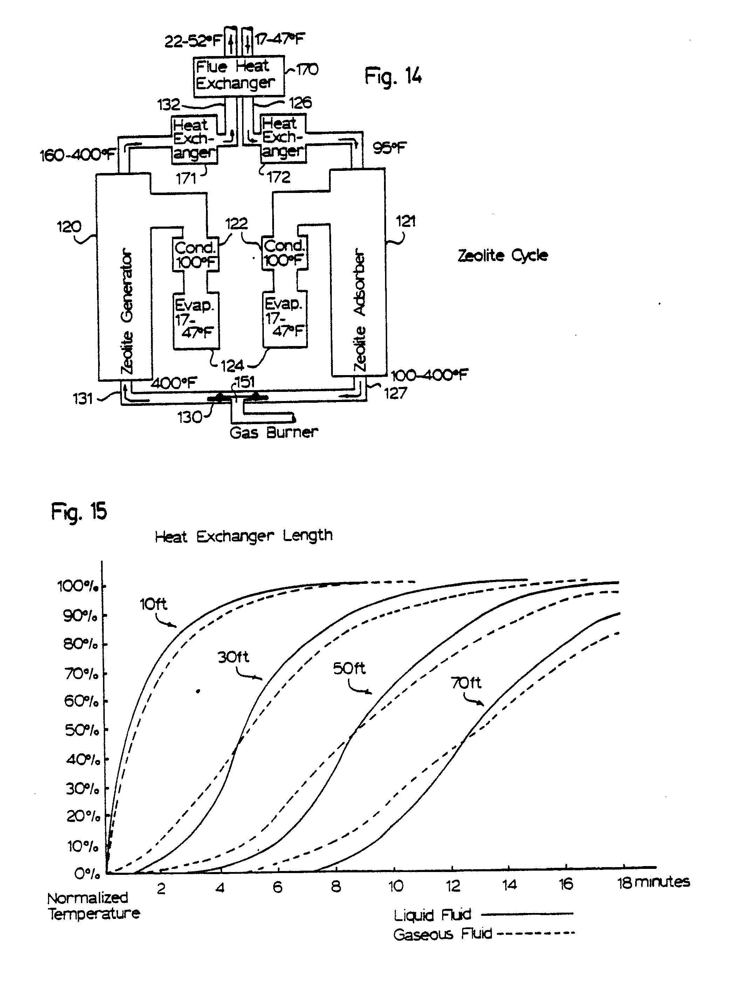

The heat exchange fluid from converter 120 exits through the outlet conduit 132 considerably cooled due to the heat exchange which takes place in converter 120. During the heating season, as indicated in Fig. 14, the heat exchange fluid may be further cooled by additional heat exchange means 172 to about 100°F (38°C).

After the above portion of the cycle is completed, the process, the flow of heat exchange fluid, is reversed. Outlet conduits 127 and 132 become inlet conduits whereas inlet conduits 126 and 131 become outlet conduits and the direction of flow through the heating station 130 is reversed. Converter 120 becomes the adsorber and converter 121 becomes the generator of the refrigerant gas. The remainder of the cycle is a repetition of the above described cycle with the condenser 122 in converter 121 heating and the evaporator 124 in converter 120 cooling. Thus, one adsorber is supplying heat and one adsorber supplying cooling at all times, and the duties alternate with the reversal of heat exchange fluid flow.

Fig. 4 discloses typical adsorption isosteres for zeolite and water vapor. Isosteres are lines of constant loading of the refrigerant gas (water vapor) into the zeolite as a function of the zeolite's temperature and the refrigerant gases' dew point. At 100°F (38°C) zeolite temperature and 47°F (8°C) refrigerant temperature indicated by point A, the zeolite adsorbs about twenty-three percent of its weight in water vapor. The adsorption starts with the water vapor at about nine millimeters of mercury or less. The zeolite is next heated to 160°F (71°C) before it is possible for the vapor to start being condensed at a 100°F (38°C) condenser temperature. This is represented by point B. The gas pressure in the system is raised to about fifty millimeters of mercury or higher by the heating of the gas before it commences to condense. From 160°F to 400°F (71° to 205°C), as represented by point C, the zeolite desorbs from twenty-three percent to eight percent, or a total of fifteen percent by weight, of its refrigerant vapor which is condensed at the 100°F (38°C). The Zeolite next cools from 400°F to 305°F (205°C to 151°C) (point D). This reduces the pressure of the refrigerant gas in the converter to about nine millimeters of mercury or less and upon further cooling from 305°F (151°C) to 100°F (38°C), the latter represented by point A, the refrigerant gas is evaporated from the evaporator 124 at 47°F (8°C) and the zeolite in the converter adsorbs fifteen percent by weight of the refrigerant gas whereupon its percentage of water vapor by weight is increased from eight percent to twenty-three percent. The cycle is thus completed. From this diagram, it will be understood that heat exchange between converters, one in the generator mode and the other in the adsorber mode, takes place in the range of 160°F to 305°F (71° to 151°C) at the minimum.

The specific heat of the zeolite given in BTUs per pound degree Fahrenheit varies from 0.3 and 0.1 depending upon the amount of vapor desorbed. The heat of adsorption varies from 1200 to 1500 BTUs 1.3 x 10⁶ to 1.4 x 10⁶ joules) per pound and the desorption rate is about 0.0625 percent for each degree Fahrenheit. This provides a desorption contribution so that the specific heat plus desorption remains almost constant and at about one BTU per pound for each degree Fahrenheit of temperature change. Therefore at a constant rate of heat input, the rise in temperature with time without desorption, from 100°F to 160°F (38°C to 71°C) is over three times faster than when desorption is taking place from 160°F to 400°F (71°C to 205°C). Similarly, during the cooling part of the cycle, the cooling rate provides a constant heat loss of up to five times more rapid without adsorption being present from 500°F to 305°F (60°C to 151°C) than when the adsorption is occurring from 305°F to 100°F (151°C to 38°C).

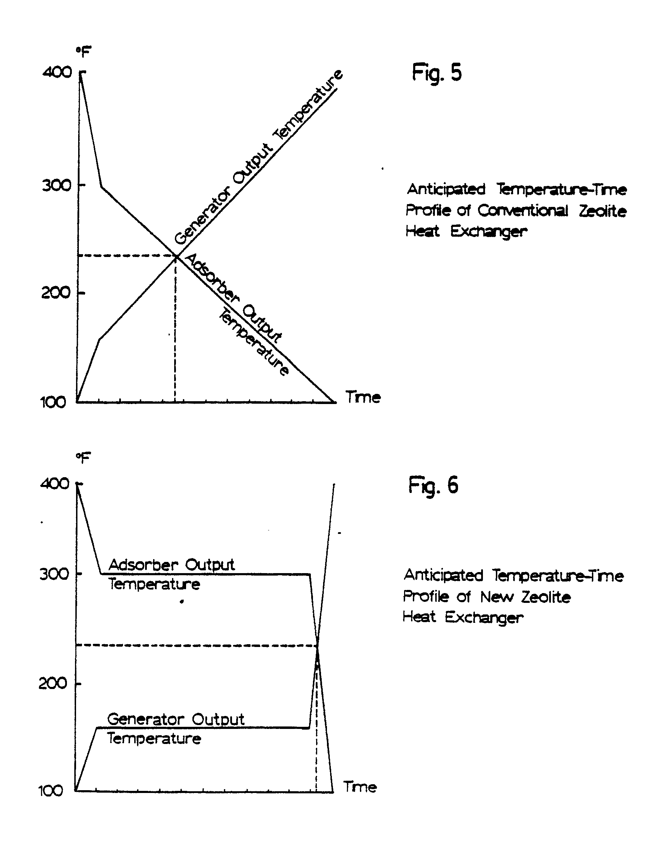

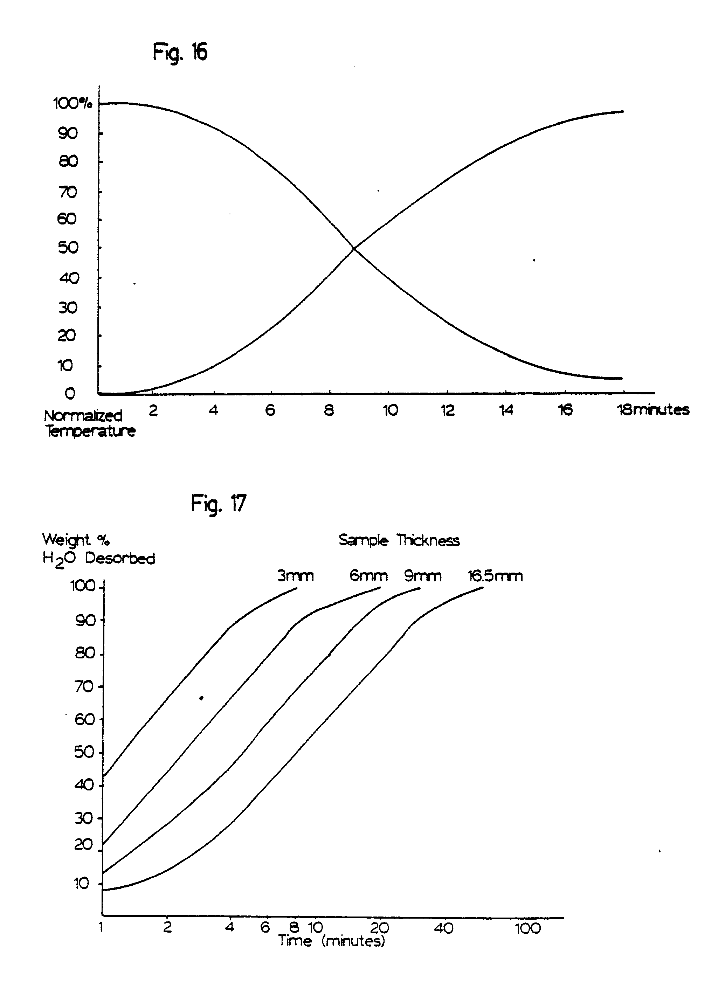

Fig. 5 shows the theoretical temperature-time profile for the zeolite of the zeolite containers. Assuming all of the zeolite in the converters was at the same temperature and simultaneously followed the temperature profiles of Fig. 4, 37.5 percent of the adsorber energy is transferred from the converter in the adsorber mode to the converter in the generator mode before the two temperatures cross at about 240°F (115°C). Allowing for twenty percent irreversible losses in the heat exchanger, a net energy transfer of over thirty percent can be provided. Inasmuch as the coefficient of performance on this cycle in cooling without the energy transfer is about 0.7, a thirty percent reduction of input requirements increases the cooling coefficient of performance to one and the heating coefficient of performance to two. Because there is a time and temperature lag between the heat input and equalization of temperature in the actual zeolite container, the increase of coefficient of performance is, in fact, higher. Further, by designing the heat transfer conduit so that a heat front is propagated through the zeolite of the converter, the improvement is considerably enhanced. The theoretical temperatures for such system employing a heat front are illustrated in Fig. 6. However, the actual temperatures attained conform more nearly to those temperature-time profiles indicated in Fig. 16.

Referring to Figs. 9 through 13, it will be seen converters 120 and 121 can be placed in a single cylindrical container 134 which is suitably insulated and has an insulated divider 135. Fluid conduits 125 for the passage of heat transfer fluid are intentionally formed from a thin metal of low thermal conductivity. Received on each conduit 125 is a tile or pack 136 comprising a thin layer of zeolite enclosed in a high thermal conductivity material such as copper foil. Each packet 136 has the form of a flattened toroid only a few millimeters thick, which on its bottom is provided with a plurality of outwardly extending protrusions 137 or dimples and on its top side as shown in Fig. 13, a plurality of openings 140. The purpose of protrusions 137 or dimples is to provide spacing and resilience between individual packets 136. The hole 141 in packet 136 is dimensioned so as to fit tightly on conduit 125 to maximize thermal conduction between conduit 125 and the copper portion of packet 136 which contains a thin layer of zeolite, so heat which is delivered by the heat transfer fluid travelling through conduit 125 is quickly conducted to the zeolite in packet 136 via the surrounding copper foil. For example, the packets 136 can be installed on conduits 125 after the latter have had their temperature reduced so that upon expanding, a tight fit is accomplished. If desired, conduits 125 can be threaded to provide alternating thin and thicker grooves along their outer peripheries which are received tightly by corresponding grooves on the interior periphery of packet 136 defining 141.

The purpose of the foregoing structure is to create a propagating temperature front in the zeolite along each of the conduits 125. Thus the heat exchanger which comprises conduits 125 in each converter 120 and 121 has a plurality of nesting and contacting packets 136 from top to bottom and its heat transfer coefficient from the heat transfer fluid to the zeolite is larger than the conductivity along the path of the heat transfer fluid, the thermal conductivity along the conduit 125 being relatively low. The specific heat of the heat transfer fluid is also relatively low compared to the heat capacity of the zeolite augmented by desorption. As a result, a temperature front is created in the zeolite layer. The temperature front moves slowly along the length of the conduit 125 whereby in the generating converter the bottom zeolite packets are desorbed first and the corresponding layers of packets 136 which have been desorbed moves upwardly in the direction of the heat flow. Similarly, in the adsorbing converter a front in adsorbing packets 136 will move, again in the direction of the heat transfer fluid flow, downwardly. With such heat exchange, the output temperature profile over time for the converters when in the generator mode and the adsorber mode is shown in Fig. 6. In this manner, more than sixty percent of the thermal energy from the adsorber can be exchanged and the coefficient of performance of the system approaches that of theoretical Carnot efficiency.

The solution to the heat diffusion equation for the metal-zeolite innerface and in the zeolite thereafter is represented by the following equation:

$$T(x,t) = T_o \, erfc(X/\sqrt{Kt})$$

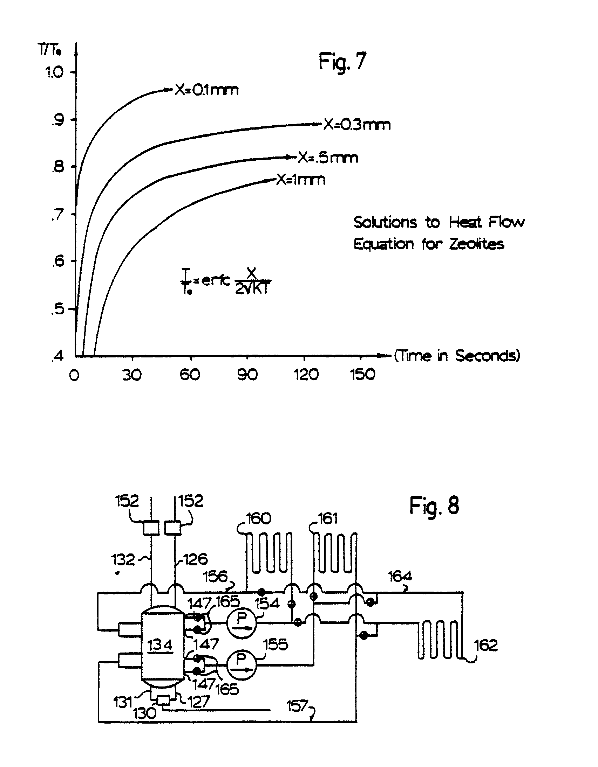

The coefficient K represents a number of physical constants such as the thermal conductivity of the zeolite, its specific heat and, above 150°F (65°C), the heat of desorption of the refrigerant gas. From Fig. 7, which represents the variation of zeolite temperature with time for different zeolite thicknesses, x = 0.1 to 1 mm, it will be understood that there is an upper limit of the zeolite layer's thickness. The zeolite layer thickness can range from about 3 to about 17 mm with a preferred thickness of less than about 6 mm. By use of low conductivity metal for the conduit 125, ninety percent Copper, ten percent Nickel alloy, and wall thicknesses of less than five mils. the prerequisites for the creation and propagation of a temperature front as discussed above exists. This temperature front is not, of course, in practice a straight line or plane but rather involves the thickness of several zeolite packets. A more desirable or sharper temperature front is provided when the heat transfer fluid is a liquid rather than gas.

Due to the non-linearity of the adsorption isotherms for zeolite, condenser temperatures may, if desired, be increased without causing a reduction in the capacity of the unit more than would exist were conventional adsorption or absorption systems utilized and, in fact, the reduction in capacity is less. Inasmuch as in the heating mode, there is a considerable amount of energy available in the converter in the adsorber mode at 160°F (71°C) and below, it is advantageous to keep the condenser at about 100°F (38°C) and use it to preheat the load fluid with a further increase in its temperature to about 160°F (71°C) by heat from the converter in the adsorber mode. When cooling, the condenser is cooled indirectly by ambient air or in a heat sink or the like, and the variation with air temperature of capacity is small.

As previously indicated, specific embodiments for the invention can be varied considerably depending upon the heating and cooling demands which are placed on the system. An embodiment is shown in Fig. 9 wherein the converters are in a single unit which can be installed in an existing building and connected with an existing system in lieu of the furnace or air conditioner already installed. The container 134 for the units 120 and 121 is essentially an insulated tank having a structural capacity for a high interior vacuum which, in an operation wherein the refrigerant is water, may be five millimeters of mercury or less.

The container 134 contains two energy converters 120 and 121, each energy converter having, in effect, three heat exchange means which comprise the fluid conduits 125, the condenser 122 and the evaporator 124. Although each heat exchange means is shown as having a single pass, it will be appreciated they may be double pass or more. Also the heat exchangers are shown as having straight tubes whereby, in practice, helical wound tubes may be utilized or plate type heat exchangers may be substituted. Further, the same heat exchanger may be utilized for both the condenser and evaporator. As a matter of practice, double pass heat exchangers are advantageous for the condenser and evaporator because they permit connections into container 134 only on one side. Further, although a divider 135 divides container 134 into two different hermetically sealed spaces 133 wherein the refrigerant is received it will be appreciated that a divider may also be utilized to provide any number of such spaces which are pie shaped as seen in plan. Thus, a single container 134 may be used for three converters, four converters or, within structural limits, any number desired.

When single pass units are involved, they may be inclined within container 134 as suggested by the disposition of parts in Fig. 8 so that if a pump is not operable to provide forced circulation of the cooling and heating water flowing through the condenser or evaporator, it can occur in any event due to natural circulation of the system. Otherwise, ice may form in the evaporator or steam may be generated in the condenser.

Flue and bottom conduits 126, 127, 131 and 132 for the air and combustion gases are each connected with their respective internal conduits 125 via an atrium 142 (Fig. 9). It will be understood such flue and bottom conduits and atriums together with the fluid conduits 125 are hermetically sealed from the space 133 within container 134 which contains the zeolite packets 136 and the refrigerant which, in the preferred embodiment, is water vapor. A barrier 144 is provided in each converter 120 and 121 to divide the zeolite and conduits 125 from the condenser 122 and evaporator 124. Such barrier has a pocket formed on each side thereof whereby the condensed water is received, the pocket surrounding the cooling water tubes 146 of evaporator 124. Each condenser and evaporator is provided with such heat exchange tubes 146 which connect on the inboard side of further atriums 145 which on their outboard sides are provided with connections 147 to receive heating or cooling heat transfer fluid, as appropriate to provide heating or cooling.

Separate from container 134 is a heating station 130 which is preferably an insulated box-shaped combustion chamber 150 into which is inserted heating means comprising a gas burner 151. As previously described, gas burner 151 can, if desired, be a fuel oil burner, an engine exhaust outlet or a heat exchanger from, for example, a solar heating unit or a geothermal fluid source. Station 130 has two outlets 131a and 127a for connection to bottom conduits 131 and 127 respectively as seen, for example in Fig. 3.

Burner 151 is provided with, of course, conventional safety devices including a pilot light and a solenoid cut-off valve in the event of failure of gas pressure whereby the pilot light is extinguished. Further, burner 151 may be utilized by being directed either towards outlet 131a or 127a to include air movement through the air and combustion gases conduits when air is the heat transfer fluid. However, preferably the direction of air movement is accomplished by energizing one of two electrically driven fans 152 which respectively connected with conduits 132 and 126. By this means, air is drawn through the fluid passageways and in the event any of the conduits for the air and combustion gases leak, then the leakage is from rather than into the area wherein the system is located. A single reversible fan may be utilized on either one of the conduits 132 and 126 in lieu of two fans 152. In this connection, it should be understood the flow of air whether caused by one fan or two fans is preferably about thirty times that required to sustain combustion of fuel from gas burner 151. Thus the chances of such combustion posing a danger to the occupants of a building wherein the system is installed is practically nonexistent.

Referring again to Fig. 8 a simplified system for heating and cooling by means of the above described operation is shown. Circulating pumps 154 and 155 are employed in water conduit circuits 156 and 157 respectively.

Circuit 156 contains one or more heating elements 160 and circuit 157 contains one or more cooling elements 161. A thermal-dissipation element 162 is contained in a conduit circuit 164 which can be connected selectively to either circuit 156 or circuit 157 so that either part or all of the circulating water destined for either heat element 160 or cooling element 161 can be dissipated to the outside or to a heat sink or the like.

Valves 165 immediately after connections 147 in circuits 156 and 157 may be solenoid valves or pressure operated valves which are controlled by temperature sensors at conduits 126, 127, 131 and 132 or by pressure sensors internal to converters 120 and 121. Fans 152 are controlled by the controls for burner 151 and the particular fan to be running at any given part of the cycle is controlled by temperature sensors located in outlets 126, 127, 131 and 132 or alternatively by internal temperature or pressures, sensors in converters 120 and 121.

Burner 151 may be controlled simply by a room thermostat which contains or is responsive to elements 160 and 161. It may also be connected to sensors at outlet 126, 127, 131 and 132 whereby, with the thermostat opened, the cycle is nevertheless continued until the adsorber output temperature crosses with the generator output temperature as shown in Fig. 6.

Sensors as indicated above may also be employed to dictate, when the system is started which fan will start first by detecting which converter has the highest temperature.

In operation, when converter 120 is heated, refrigerant gas is expelled from the zeolite therein and condensed by condenser 122 which thereby heats the water circulated by pump 154 in circuit 156. Fan 152 for conduit 132 draws air through passageways 125, such air being preheated at station 130 by burner 151. A heat front is created in the zeolite packets 136 starting at the bottom and working towards the top in successive packets which are received around the conduits 125 and when such front reaches its highest point whereby the zeolite in converter 120 has desorbed all but eight percent by weight of its water, the temperature in conduit 132 increases quickly to 400°F (205°C) thereby causing fan 152 in circuit 132 to cease operating and fan 152 in circuit 126 to commence drawing air into conduit 132 through conduits 125 in converter 120 and out of such converter via conduit 131 into combustion chamber 150. There it is heated by the flame from burner 151 and, as heated, continues through conduit 127 into passageways 125 of converter 121 and out of conduit 126. After passing through fan 152 it is exhausted into the atmosphere. The same part of the cycle previously described for converter 120 now takes place in converter 121 and air being drawn through converter 120 cools the zeolite therein by a cold front which moves downwardly. The vapor condensed into water by condenser 122 commences to boil and is evaporated in evaporator 124 into space 133 because, as the temperature of the zeolite is lowered, it commences to adsorb water vapor and also because the pressure in converter 120 is lowered. This evaporation in evaporator 124 at the lower temperature takes place at about 8°C or 47°F. However, the adsorption of the water vapor into the zeolite heats the zeolite by means of the heat of adsorption.

The heat of adsorption together with the heat source provided by the higher temperature of the zeolite and other internal structure heats the air passing through the conduits 125 while, at the same time, cooling the zeolite and other structure. A thermal front drops through the zeolite as previously described and the heated air is transferred via conduit 131 to combustion chamber 150 thus preheating and preserving the heat of adsorption as well as that due to the specific heat of other elements in the converter 120. The ultimate result is a much higher coefficient of performance than would otherwise be obtainable. During this part of the cycle, cooling water is caused by pump 155 to circulated through circuit 157 and such cooled water may be utilized for cooling purposes in the cooling season or for other cooling purposes (for example, cooling a food storage room) or dissipated as required. Because of the possibility that the temperature in the evaporator 124 may drop below freezing during the heating season, such water may have antifreeze or the like added thereto to ensure it is not frozen.

Fig. 14 is a diagram similar to Fig. 3 which is, however, a more complete representation of the zeolite gas-fired pump in the heating mode. In additions an indication of typical temperature to be experienced during heating operations is set forth in Fig. 14. Combustion air enters from the outside into the conduit 126 at a temperature which in the heating season is typically between 17°F or 47°F (-8°C to 8°C). This air is preheated by a flue-heat exchanger 170 to about 95°F (35°C). Such heat exchangers are well known in the art and therefore will not be described in detail. An example is the Dolin Heat Reclaimer manufactured by Stacor Corporation of Newark, New Jersey. Such air passes through a further heat exchanger 172 which, for the part of the cycle indicated in the Figure, is inactive. The combustion air continues into the converter 121, passing through the conduits 125. The generator 121 is in the adsorber phase and is being cooled from its prior generator phase during which it reached 400°F (205°C). Converter 121 slowly cools and continuously adsorbs refrigerant vapor from its evaporator 125 at a temperature which is typically, again, between 17°F and 47°F (-8°C to 8°C). The generated heat of adsorption plus the specific heat of the zeolite and other container structure heat the outside combustion air (heat transfer fluid) flowing through conduits 125 to between 100°F (38°C) and 400°F (205°C). With the air to zeolite heat exchanger comprising packets 136 stacked on conduits 125, the output temperature of the air and combustion gases from conduits 125 is maintained at about 400°F (205°C) for almost the entire adsorption part of the cycle.

By thermostatic or other appropriate well-known controls, the combustion air leaving converter 121 via conduit 127 is heated at heating station 130 to about 400°F. Such air is then conveyed by conduit 131 into the converter 120 wherein the zeolite is about 95°F (35°C) which it reached in its prior adsorber phase. Now with converter 120 in the generator phase, the temperature of the zeolite is increased via the propagating temperature front to about 400°F (205°C).

As soon as some of the zeolite in converter 120 is heated to above about 160°F (71°C), refrigerant gas is desorbed and the pressure increase is sufficient for the gas to condense at 100°F (38°C), the heat of condensation in the converter's condenser 122 being used to provide the heating load. Combustion gases leave converter 120 at about 160°F (71°C) at the beginning of the generation cycle, but their temperature increases rapidly to about 400°F (205°C) where it remains until the end of the cycle. During the heating season, these gases are cooled in heat exchanger 171 to about 100°F (38°C). Heat exchanger 172 may be utilized in conjunction with condenser 122 for the heating load or as a preheater for hot water and other heating purposes. It will, of course, be understood the entire heating load of the building may be furnished by the condenser 122 and heat exchanger 171 when converter 120 is in the generator phase. In a like manner, converter 121 may be used together with its condenser 122 and heat exchanger 172 to provide heat for the entire heating load of the building when it is in the generator phase. Thus, the fluid circulated through heat exchangers 171 and 172 which is heated for the purpose of the overall heating load is switched alternately between such heat exchangers in the same manner as accomplished for condensers 122 and evaporators 124. Finally, gases leaving heat exchanger 171, 172 are further cooled in the flue-heat exchanger 170 and exhausted to the outside air in a temperature range which is typically in the range of 22°F to 52°F (-6°C to 11°C). Heat carried away from the evaporators 124 is typically dissipated in element 162. It is not, however, unusual for larger buildings to require both heating and air conditioning at the same time due to the location of the sun and other factors. Thus it is possible by using the instant invention with an appropriate plumbing arrangement both to heat and cool simultaneously.

After the described portion of the cycle is completed, the process is reversed and the direction of air flow through the heating station 130 is also reversed. The cycle is repeated as described above with condensers and evaporators also being interchanged.

The coefficient of performance of the heat pump described above and disclosed in Fig. 14 is theoretically about three for the heating mode where the evaporator temperature is 17°F (-8°C) and the condenser temperature is 100°F (38°C) for a load of 160°F (71°C). In practice, of course, the coefficient of performance is less. But with proper design is nevertheless within about eighty percent of the theoretical value, that is, about 2.4.

The time of each cycle depends upon the size of the unit. With the proper design, in theory it could be short as two and one-half minutes. However, to ensure that the materials, particularly conduits 125, are sufficiently strong and durable, as a matter of practice, the cycling time is fifteen to thirty minutes. With the zeolite temperature range being from 100°F to 400°F (38°C to 205°C), it desorbs about fifteen percent by weight of water vapor and each pound of zeolite produces about 150 BTUs ($1.6 \times 10^5$ joules) of cooling when the 0.15 pounds of water is condensed and evaporated during a cycle. Thus with fifteen minute cycling, 600 BTUs ($6.3 \times 10^5$ joules) per hour of cooling are provided per pound of zeolite. For one ton of air conditioning, that is, 12,000 BTUs ($1.3 \times 10^7$ joules) per hour, twenty pounds of zeolite are therefore necessary.

It is advantageous that the zeolite in packets 136 be composed of thin slices of natural deposit zeolite which are only a few millimeters thick. Each zeolite slice is then inserted into a corresponding packet 136 made of thin copper foil. When the surrounding packet 136 is then evacuated, the copper foil is brought into close contact with the zeolite slice to provide a good thermal conduction for the thermal cycling without a need for binders.

The end product, which is essentially the container 134 with the converters 120 and 121 installed together with the combustion chamber 150 and gas burner 151, is an adsorbent heat pump having a cooling coefficient of performance of between one and two and a heating coefficient of performance between two and three. The weight of the unit is somewhat less than eighty pounds for each ton of cooling and its price is competitive with or less than that of existing electrically driven heat pumps for each ton of cooling. For most areas, the operating costs are significantly less. Moreover, both in initial cost and in operating and maintenance costs for the unit is substantially less than the combination of electrical air conditioning and a gas furnace. This advantage is expected to continue even if an increase in gas prices occurs to the extent that the heating and cooling costs for a building will be reduced despite the increased gas prices. The system is particularly attractive for the central and northeastern parts of the United States where annual heating costs of over $1,000 are sufficient to justify the replacement of existing systems with a repayment period of about two years without considering tax credits.

It will be noted the system does not utilize inside air for combustion as is frequently the case with conventional gas furnaces. Although the circulation of air may occur or be provided by other means including diffusion and intentional circulation of interior air to the outside and vice versa, the inevitable loss due to the forced infusion of air which results from a conventional furnace is thus eliminated by the invention.

In Fig. 15 various lengths of heat exchangers are compared to show the temperature increase which occurs for various effective lengths of the heat exchangers in terms of time. It will be noted that the shorter the heat exchanger, the more rapidly the temperature rises. Fig. 15 together with Fig. 16 are important for the purpose of showing the actual efficiency of energy recycled between the two containers. Thus Fig. 16 discloses the reduction of temperature in one of the containers while the temperature in the other container is increasing. Fig. 16 together with Fig. 15 indicate a seventy percent recycling of energy between the two container. In generating the data shown in these figures, the normalized temperatures for gas were 100° F, 400° F (33° C to 205° C) for the gaseous fluids and 25° C for the liquid fluid.

Fig. 17 discloses the measured performance of different thicknesses of zeolite when immersed initially in a well-stirred liquid bath with a temperature differential of 100° C. Thicknesses ranging from three millimeters to 16.5 millimeters were tested. Such results indicate that a cycling time of three to four times per hour is not only feasible but also can be achieved with zeolite samples in thicknesses up to one-quarter inch thick or about six millimeters. However, it is important that the thermal flows into and from the zeolite be from both sides of the envelope so that the effective thermal path is reduced considerably.

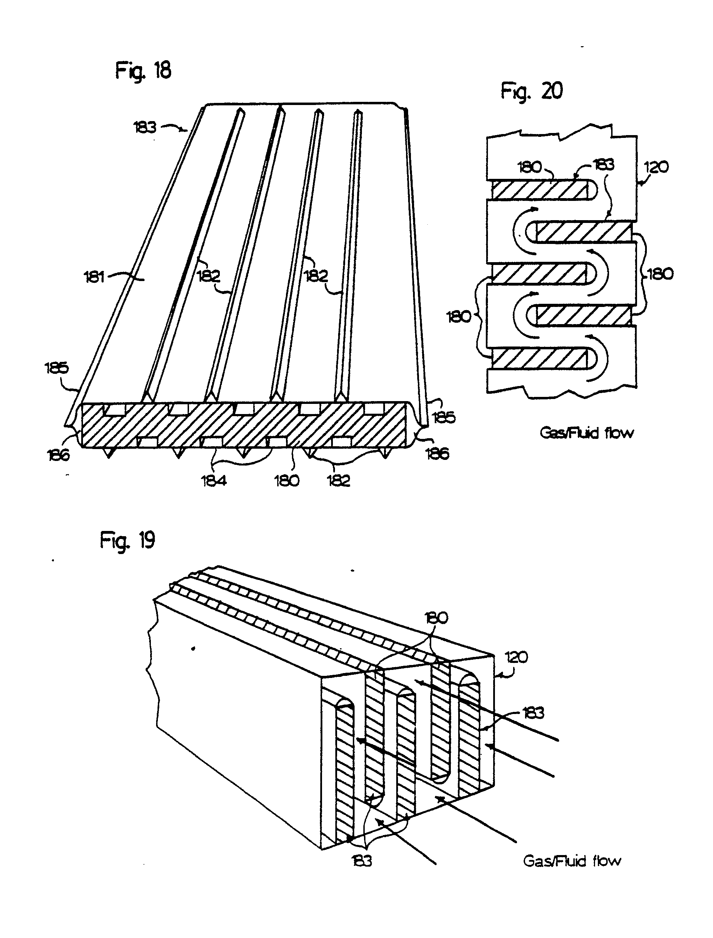

A zeolite heat exchanger unit 183 found advantageous is shown in Fig. 18. This may be substituted for packets 136 and conduits 125 as shown in Fig. 9 with channels 182 and 184 being in fluid passage communication with the hermetically sealed space 133 through which refrigerant flows. This type of envelope was utilized for the test which produced the results shown in Fig. 17. Zeolite bricks 180 are enclosed in a copper foil envelope 181 which includes a plurality of fins 182 which also form corrugated channels in the copper foil. The zeolite 180 also has a plurality of channels 184 and water vapor or other fluid flows readily through channels 182 and 184. Flue gases flow around foils 181. Foils 181 are sealed around their edges 185, such seal forming a further fin and on the inside a further channel 186.

The zeolite heat exchanger means 120 and 121 may thus be constructed of a number of units 183 either in parallel as illustrated in Fig. 19 or in series as illustrated in Fig. 20. The final configuration is determined by the size and capacity of the cooling unit. Typically, a one ton cooling capacity unit having twenty pounds of zeolite is cycled four times per hour between 100° F and 400° F (38° C to 205° C) and heat exchanger units 183 consist of three millimeter zeolite bricks 180 in thin copper envelopes. For maximum heat exchange effectiveness this produces a packing density of heat exchanger 120 of about 0.5 pounds of zeolite per square foot of heat exchanger. Therefore the total area of the heat exchanger is forty square feet which may be divided between the two containers 120. Air flow velocity for the gaseous heat transfer fluid is ten feet per second which provides a heat transfer coefficient to the copper envelope of 3 BTU/sq.ft/hr.° F. To increase this coefficient, as indicated, the copper foil is provided with corrugated channels 182 which act as fins to increase the surface area of the heat exchange and simultaneously to function as channels through which the water vapor travels.

As shown in Fig. 18, the zeolite brick 180 is provided with channels 184 for vapor travel. This, however, reduces the contact area between the zeolite and the copper and therefore the heat flow to a certain degree.

Zeolite bricks 180, as such, have been prepared by two separate methods. The first is by slicing natural zeolite rock with a carbide saw. A second method is by pressing powdered zeolite in a die. In the pressing, zeolite powder is slightly wetted with water and then pressed to the desired configuration at pressures of up to about one hundred, forty kilograms per square centimeter to produce a brick which dry has a density of about 0.8 grams per cubic centimeter. It has been found that these measures are required to produce high thermal conductivity and heat flow in the zeolite and therefore are important for a successful system. Zeolite bricks 180 are preferably not more than about ten millimeters in thickness.

With laminar flow of oils, the Biot number is less than that with any flow of gases. Further, calculations predict a sharper temperature front and therefore eventually a higher system efficiency with a liquid flow vis-a-vis gaseous flow. These calculations have been confirmed by experimental observation of thermal front propagation.

In an embodiment using oil as the zeolite/condenser/ evaporator heat exchange fluid, water is retained as the working medium, that is the refrigerant, in preference to other refrigerants such as ammonia, alcohols and freons. Water has the highest heat of vaporization of candidate refrigerants and, in addition, is stable at $400^\circ$ F ($205^\circ$ C) in zeolites. Although COP may be shown as a function of zeolite and condenser temperatures, the evaporator temperature influences COP more than the condenser temperature. Because of their non-linearity, zeolites operate in systems with air-cooled condensers without any significant loss in performance. Natural zeolites have been found superior to synthetic ones, especially at the lower temperatures (between $200^\circ$ F and $350^\circ$ F ($92^\circ$ C to $175^\circ$ C)). However, their superiority reduces significantly at $400^\circ$ F ($205^\circ$ C).

As indicated above, the provision of a relatively sharp temperature front in the zeolite increases the efficiency of the system and, on the basis of both theory and experiment, liquid rather than gaseous fluid provides a sharper front in the zeolite. Experiment and theory agree that with a front moving alternatively in one direction and then back in the other direction, an advantageous cost-effective length for a heat exchanger is about thirty-six feet (11 meters) inasmuch as increases in COP begin to reduce after this length. A close, but somewhat longer length of forty-three feet (13 meters) has been selected for the heat exchanger with the zeolite in the embodiment under consideration. The theoretically predicted temperature front width is about 60% of the total length for a heat exchanger length of thirty-five feet (10.7 meters) If the heat exchanger length is forty feet (12.2 meters), then the front width is 59% and for a forty-five foot (13.7 meters) length of heat exchanger it is 58%. For a thirty-six foot (11 meters) heat exchanger, about 75% of the energy can be recycled to increase the cycle COP to 2.0. If maximum COP was the only consideration, then, of course, the longer the heat exchanger, the better. However, for similar designs, the cost per unit length of heat exchangers and the cost of associated equipment also increase and because of this trade-off, about thirty-five (10.6 meters) to about sixty feet (18.3 meters) is considered optimum for the length of the liquid/zeolite heat exchanger.

The heat exchanger using a liquid fluid incorporates natural zeolite from Bowie, Arizona that is capable of desorbing 15% by weight of water vapor which, when condensed in the evaporator, produces 12,000 BTUs ($1.3 \times 10^7$ joules) of cooling. Such zeolite which is about 1/4" thick, actually six millimeters, using the thin copper material for heat exchange purposes, has a timed constant on desorption of 3.5 minutes and desorbs better than 95% of the equilibrium water vapor in ten minutes or less. Although 1/4" (6 mm) thickness is desirable because of the integrity of the zeolite, a thinner zeolite can be used if it is desired to reduce the time constant on desorption. A square foot of zeolite tile 1/4" (6 mm) thick weighs about 1.3 pounds including the adsorbed water. Flat tile geometry for the zeolite is preferred inasmuch as with atmospheric pressure on one side of the copper foil against the zeolite tile which is in vacuum, good thermal contact and heat transfer from the fluid to the zeolite is ensured irrespective of the constant cycling in temperature and differences of thermal expansion coefficients between copper and zeolite.

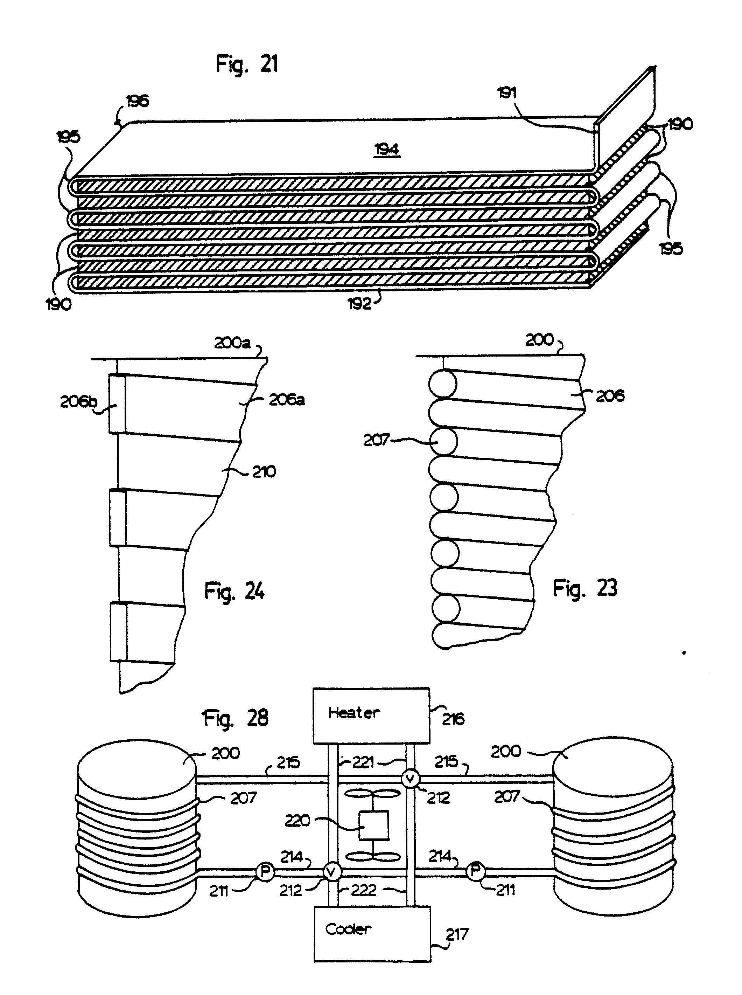

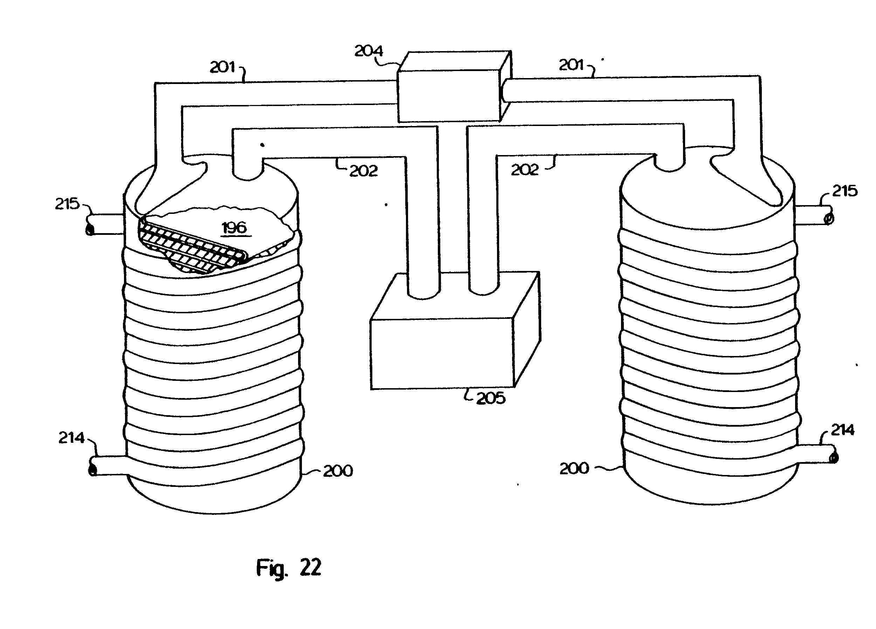

For low cost and simplicity of manufacturing, the design shown in Fig. 21 has been selected. Here the copper foil duct 194, wherein the foil is about .35 millimeters thick within a preferred range of .2 to .5 millimeters, is folded in two and the edges 192 are welded together to form the equivalent of a flat pipe or duct 194 about one foot (30.5 cm) in width and up to about forty-five feet 13.7 meters) long. Duct 194 is formed with $180^\circ$ bends 195 every foot to provide a serpentine structure with 1/4" thick 12" x 12" (6 mm x 30.5 cm x 30.5 cm) zeolite tiles between the serpentine turns from alternating sides to form a stack 196 which, because the duct 194 is about 1/8" (3 mm) in thickness, is roughly 13" wide x 12" deep by 16" high (33 cm x 30.5 cm. x 40.6 cm).

In this embodiment the length of duct 194 is roughly forty-three feet (13 meters) inasmuch as there is one more layer of duct than zeolite tiles 190 and the turns in the duct's serpentine configuration must be accounted for. To reduce duct 194 without reducing the capacity of the zeolite tiles to adsorb and desorb water vapor preferably the depth of the duct and the zeolite tiles perpendicular to the direction of the duct should be increased and the width may be correspondingly decreased. If sufficiently increased, the capacity of stack 196 for heating and cooling is increased.

Preferably the copper foil of duct 194 is sealed at edge 192 by electron beam welding in a manner comparable to the method widely used in the copper tubing industry. Other means are, of course, known as ultrasonic welding and brazing (silver soldering).

Zeolite tiles 190 may be pressed from zeolite powder with the proper binders and lubricants. Slicing of natural rock zeolite is also known to produce operable zeolite tiles. There need not be only one tile for each layer. For example, four 6" x 6" (15 cm x 15 cm) tiles may be used in the place of a single one foot square (929 cm²) tile. Smaller tiles have the advantage of providing additional surfaces and channels through which water vapor may be adsorbed and desorbed from the tiles. To avoid crumbling, the zeolite tile may be provided with copper frames or pressed into copper honeycomb-type cores. In addition, because the copper in duct 194, when vacuum is applied to the zeolite tiles, conforms itself to the contours of the surface which it engages, with the tiles properly shaped and disposed relative to each other at each level, grooves are formed by the vacuum applied to the zeolite tiles in the copper foil which both strengthen the duct and increase the effective foil-to-zeolite surface engagement. This can be further increased by creating channels in the zeolite tiles 190 when they are pressed or by providing grooves on the surfaces of natural rock zeolite. Such channels or grooves, if sufficiently deep, serve the purpose of both strengthening the adjacent engaging copper foil and enhancing vapor transport from and to the tile. Moreover, because the grooves, however formed, are only in the transverse parallel flat portions of the copper foil, the portions comprising bends 195 are not affected. The forming of bends 195, in manufacture, without collapsing when the 180° bends are formed, is accomplished by filling duct 195 with Cerobend alloy which melts at 158°F (70°C), before bending. The bend is thereby accomplished as though a solid metal plate is involved and the alloy is subsequently melted, recovered and reused for further manufacturing operations. Alternatively, the duct may be filled with sand before bending or may be bent under hydraulic pressure and the problems involved are not greatly different than those utilized to bend copper tubing without collapsing the walls.

Using a 1/8" (3 millimeter) spacing between the top and bottom of the copper foils of duct 194 results in the volume of each heat exchanger or stack 196 being about three gallons. Because of the high viscosity of most high-temperature oils which may be used for this purpose, reducing the space between the foils to less than 1/8 of a inch (3 mm) substantially increases the pressure drop across each stack 196. With, however, the 1/8" (3 mm) spacing the pressure drop, using high-temperature oil with a maximum viscosity of five to ten centistokes, does not exceed about five psi (3 x 10⁴ pascals) across stack 196. High temperature oils practicable for the heat-exchange fluid are well within the skill of the art. An example is Therminol 60 which has a viscosity of five centistokes (cm²/sec) at 100°F (38°C), two at 200°F (92°C) and an operating temperature up to 600°F (315°C).

Stack 196 is housed in an air-tight container 200. As in previous embodiments and as shown in Fig. 22, there are two containers 200, each of which has conduits 201 and 202 for a sealed flow passage to the upper channel and lower channel respectively of duct 194. Each container 200 is generally cylindrical in shape and of such size and configuration internally to restrict stack 196 in a vertical direction whereby it does not expand when air is evacuated from container 200 and it contains water vapor at low atmospheric pressure.

Conduits 201 contain a reversible pump 204 which is preferably a gear pump to ensure that the flow rate remains constant even though the viscosity of the high temperature oil which it causes to flow through conduits 201, duct 194, conduits 202, and a boiler 205, changes viscosity by almost an order of magnitude. Also, of course, it is necessary that the flow of the oil be reversed each cycle with the least complications. The gear pump involved has an operating temperature of at least 200°F (92°C) and is connected to a variable speed reversible motor of 1/8th or 1/4th (93 or 186 joule/sec) horsepower capacity. The combination is capable of pumping up to two gallons per minute at twenty pounds per square inch pressure (7.5 x 10⁻³ cubic meters per minute at 1.379 x 10⁵ pascals) and operating the system at an input of about 118,000 BTUs per hour (1.25 x 10⁸ joules/per hour).

In this embodiment, each container 200 does double duty as a condenser and an evaporator by alternately cooling and heating the vertical wall of its cylindrical shape. A preferred embodiment is shown in Fig. 23 wherein the wall (which is copper) is corrugated with a continuous helical groove 206 which, in turn, receives copper tubing 207. It will be appreciated that the corrugations increase the strength of container 200.

Fig. 24 illustrates an alternative arrangement. Here a container 200a, again composed of copper, is embossed with a pattern of channels 206a and a corresponding outer shell 210 is also embossed with internal channels 206b. Container 200a has shell 210 welded thereto in such a manner that the embossed channels 206a and 206b define a helical flow pattern which is used to receive the heat exchange medium. Otherwise container 200a is the same as container 200.

The purpose of boiler 205 is to increase the temperature of the oil passing therethrough to 400° F. Preferably boiler 205 is gas fired and may be any of a large number of boilers designed for this purpose. It may be heated by any known energy source for this purpose including engine exhausts, geothermal sources, and solar energy either to supply part or all of the needed thermal energy required for the system to operate.

In this embodiment, there are three hermatically sealed contiguous spaces which are isolated from each other. The innermost comprises the interior of duct 196, contiguous conduits 201 and 202 and the flow passages through pump 204 and boiler 205. Such space is completely filled with high temperature oil. The second sealed space (actually two separate spaces) is the interior of each container 200, which is exposed to the zeolite which, in turn, adsorbs and desorbs water vapor in the containers at sub-atmospheric pressures as previously discussed with reference to Fig. 4, that is, between about nine and fifty millimeters of mercury.

The third contiguous space is defined by the copper tubing 207, or the passages defined by channels 206 and 207 in container 200a, and the conduits therefrom which form the heating and cooling loops. This space is normally filled with water.

Referring to Fig. 28, it will be noted that the loops for exterior water include lower conduits 214 and upper conduits 215 which respectively connect on lower and upper ends of condenser/evaporator coiled tubes 207 of each container 200. Both upper conduits 215 connect to a double-channel two-way valve 212 and a similar valve 212 connects the lower conduits 214. Valves 212 are controlled by solenoids (not shown) alternatively to connect one of the containers 200, acting via its tubes 207 as a condenser, to heater 216 and the other container 200, via its tubes 207 when acting as an evaporator, to cooler 217. Heater 216 and cooler 217 contain coils for conveying the water received from conduits 214 and 215 which are subjected to air flow from fan 220 so that, depending upon whether the building space is being heated or cooled, the air is either expelled to the atmosphere or circulated in the building. With individually controlled spaces in the building, some such spaces may be heated while others are cooled and, of course, heating elements may be employed with cooler 217 for increasing the temperature of cooled air from which the condensate has been removed, and for heating domestic water. The conduits leading to heater duct in Fig. 28 are designated by reference numeral 221 and those for the cooler loop through cooler 217 are designated by reference numeral 222.

Pumps 211 have a capacity of five gallons (1.879 x 10$^{-2}$ cubic inches) per minute and use about sixty-three watts of power. If desired, they may be reversible with the reversing of the cycle. The schematic shown in Fig. 28 is simplified and it will be appreciated that both heater 216 and cooler 217 may represent a plurality of heaters and coolers which may have various dispositions relative to the building which is heated and cooled by the system.

In operation, heated oil is drawn from boiler 205 at 400° F (205° C) into one of the containers 200. The heated oil enters the bottom of duct 194, heating the adjacent zeolite tiles 190 as it proceeds through duct 194. Such tiles, upon being heated, desorb water vapor which raises the pressure in container 200. This water vapor is continually condensed by the cooling effect of water circulating in tubes 207 (or channels 206b) and, on condensing, transfers its thermal energy to the water in such tubes (or channels) which is circulated to heater 216, via conduits 215 and 221, wherein the thermal energy is removed and the water returns via pump 211 to continue the condensing process together with the heating of the circulating water. Because of the heat front which exists in the ribbon of oil as it flows up the serpentine path between the zeolite tiles 190, such tiles are heated from the bottom up and during the period of the cycle, water vapor continues to be desorbed from these zeolite tiles, to be condensed by water flowing through tubes 207 (or channels 206b) and to transfer thermal energy imparted to such water to heater 216.

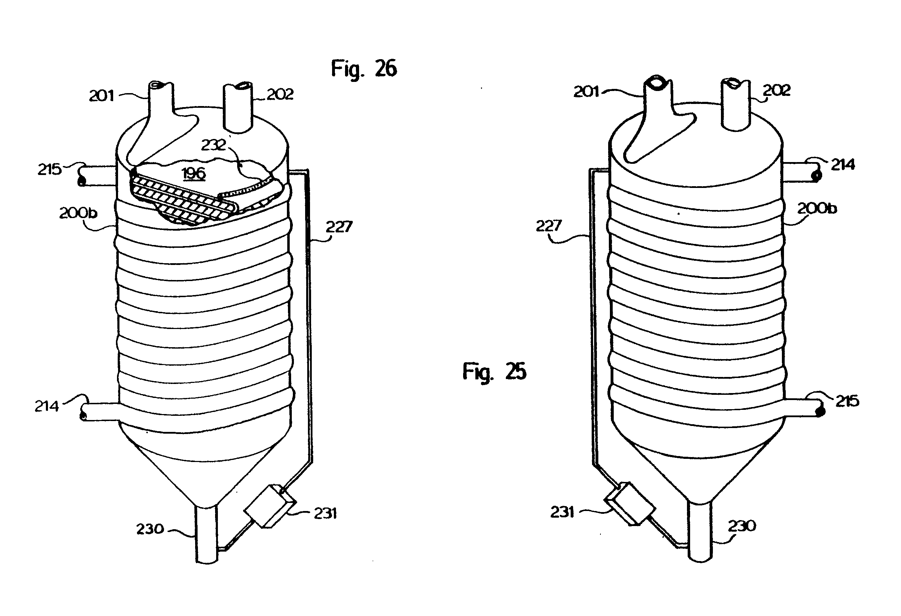

At the same time, pump 204 is moving oil (cooled in the previous half-cycle) into the top of the other container 200 and stack 196 therein and, more specifically, into the top of duct 194. Here the zeolite tiles, having been previously heated and activated, are now in condition to adsorb water vapor in container 200. If desired, duct 201 may be selectively divertible through a heat exchanger such as heater 216. As the zeolite tiles 190 cool, pressure in container 200 reduces, vapor being adsorbed into the zeolite, and the previously condensed water therefore commences to be evaporated taking thermal energy from water flowing through the surrounding tubes 207 (or channels 206b) which passes via conduits 214, 215, valves 212, and conduits 22 to cooler 217 where the water is warmed and recirculated back to the tubes 207 (or channels 206b) surrounding container 200. As the cooling of zeolite tiles 190 continues in a downwardly direction, the cooling effect also continues. Heat of adsorption is of course largely retained due to the heat exchange from the zeolite tiles 190 to the oil. If desired, conduits 215 may include a spiral or undiluted form portion in the bottom of container 200 for an improved heat exchange relationship. Alternatively or in conjunction therewith, a return condensate line may be provided from the bottom of each container 200b as illustrated in Figs. 25 and 26 to enhance evaporation and adsorption in tiles 190. Here condensate in container 200b is received by gravity in sump 230. Such condensate, during the evaporation phase, is pumped by means of a peristaltic pump 231 through line 227 which passes through the wall of container 200b wherein it is received by a circular or partially circular ring manifold 232 to distribute same into a falling film on the inside wall of container 200b to enhance evaporation.

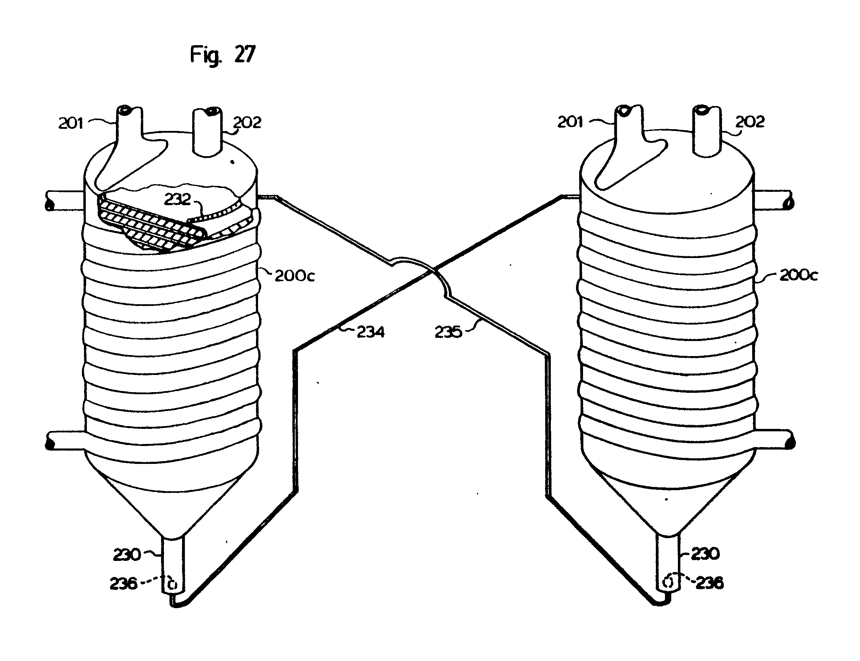

Fig. 27 illustrates a cross-over arrangement between containers 200c which are essentially identical to containers 200b. In this system, condensate in one container is caused by adsorption and thus a reduction of pressure in the other container to move therefrom via a cross-over line 234 or 235. If desired, a float valve 236 or 237 may be installed in each sump 230 to ensure that the condensate alone is transported by the pressure differential and no equalization of pressures in the containers 200c takes place. This may be assured for normal operation conditions by the head of water which occurs in lines 234 and 235 in any event which may be enhanced by raising the relative height of lines 234 and 235. For maximum efficiency, the oil outlet temperature from each container 200 is retained at or under a relatively low temperature ($200°$-$300°$ F ($92°$ to $149°$ C)) whereas for increased capacity its maximum permissible temperature is increased ($300°$-$400°$ F ($149°$ to $205°$ C)) before the oil flow is reversed. Controls of pumps 204 and 211 and valves 212 as well as boiler 205 are thermostatically controlled.

Although the preferred embodiments of the invention have been described, it is to be understood that it is capable of other adaptations and modifications.

For example, instead of using heated air directly as a heat transfer fluid, a number of liquids such as silicon oils, glycols, and the like may be used as heat transfer fluids. As seen in Fig. 15, liquid provide sharper temperature fronts and therefore result in higher COPs. Furthermore, the energy to circulate a liquid is less than required for gases for the same amount of heat transferred, thus reducing parasitic electrical consumption.

## Claims

1. Heat pump apparatus comprising at least two separate hermetically-sealed solid-gas adsorption systems (120,121) each containing a working refrigerant and heat exchange means (125, 126, 127, 131, 132) connecting said systems and including conduit means (125) received in each system (120, 121) for the passage of a heat exchange fluid therethrough in heat exchange relationship with the adsorbent material (136), which is in engagement with said conduit means (125) in each system, said connection of said systems (120, 121) by said heat exchange means being arranged so that heat generated during the adsorption cycle of one said system is transferred through said heat exchange means and is used as part of the input energy required in the desorption cycle of the other said system, whereby the need for external energy input for said desorption is greatly reduced, characterised in that, said conduit means (125) is arranged with respect to at least one of said systems (120, 121) so as to be in immediate thermally conductive relationship with said adsorbent material (136) which is disposed along the conduit means and is so dimensioned and configured that the transmission of thermal energy by the adsorbent material in a direction transverse to the conduit means occurs more rapidly than the transmission of thermal energy by the adsorbent material along the conduit means thereby creating a propagating temperature front which advances through the adsorbent material, during each operating cycle, in the direction of flow of said heat exchange fluid through the conduit, the propagating temperature front presenting a temperature transition, the temperature of heat exchange fluid on the upstream side of the temperature front being significantly different from the temperature of heat exchange fluid on the downstream side of the temperature front, and the propagating temperature front causing the working refrigerant to be adsorbed by or desorbed from the adsorbent material, such that the movement of working refrigerant into or out of the adsorbent material advances through the adsorbent material in the same direction as the flow of the heat exchange fluid in the conduit means.

2. Heat pump apparatus according to claim 1, in which the conduit means (125) is arranged in a similar manner with respect to each of said systems (120, 121) so that relatively sharp temperature fronts are propagated substantially simultaneously through both systems.

3. Heat pump apparatus according to claim 1 or claim 2, wherein the adsorbent material (136) of said systems (120, 121) is zeolite.

4. Heat pump apparatus according to claim 2, in which each adsorption system (120, 121) comprises a container defining an hermetically sealed space (133) housing said adsorbent material (136) in thermal communication with said heat exchange conduit means (125) which extends through said space, a refrigerant which is adsorbed and desorbed by said adsorbent material in response to temperature changes of said conduit means (125), condenser means (122) for condensing said refrigerant, and evaporator means (124) for evaporating said refrigerant, and the apparatus further comprises means for exchanging heat with said condenser means and independently with said evaporator means of each adsorption system, said heat exchange means (125, 126, 127, 131, 132) including circulation means (152) for selectively causing a heat exchange fluid to flow through said conduit means (125) of each adsorption system, and each system being operable alternately in desorption and adsorption cycles, in which desorption cycle the refrigerant is desorbed from said adsorbent material (136) along said sharp temperature front propagated in said material in response to the passage of said heat exchange fluid through the heat exchange conduit means (125), the refrigerant vapour pressure in said space (133) increases and the condenser means (122) condenses refrigerant vapour which is collected in said evaporator means (124), and in which adsorption cycle the heat exchange fluid flows in the reverse direction to cool said adsorbent material (136) and cause re-adsorption of said refrigerant thereby along the temperature front propagated in the material by the heat exchange fluid, the refrigerant vapour pressure in said space (133) reduces, and the evaporator means (124) evaporates refrigerant vapour.

5. Heat pump apparatus according to claim 4, using energy from a low-grade heat source (151) to provide heating and cooling for the interior of a building, said apparatus being operable to execute a reversible adsorption heat pump cycle, said heat exchange means including further conduit means (127, 131) linking the said conduit means (125) through the two adsorption systems (120, 121) for conveying said heat exchange fluid which has been heated in the adsorption cycle of one system to be further heated by the low-grade heat source (151) and received by the other system to heat said adsorbent material in its desorption cycle, whereby the further exchanging means of the systems co-operate to supply heat to said interior of a building from the condensor means in the desorption cycle and to cool said interior of a building with the evaporator means in the adsorption cycle, and control means for reversing the flow of said heat exchange fluid upon substantial completion of the adsorption cycle of one system and the desorption cycle of the other system.

6. Heat pump apparatus according to claim 5, wherein said low-grade heat source (151) is solar energy.

7. Heat pump apparatus according to claim 5, wherein said low-grade heat source (151) is a gas flame.

8. Heat pump apparatus according to any one of the preceding claims, in which the conduit means (125) in each said adsorption system (120, 121) is serpentine (194) and has substantially flat surfaces between turns (195), said adsorbent material (190) being received between said substantially flat surfaces and being in surface-to-surface contact with said conduit (194).

9. Heat pump apparatus according to claim 8, wherein said conduit (194) is composed of copper.

10. Heat pump apparatus according to claim 8 or claim 9, wherein said conduit (194) in each said adsorption system (120, 121) is from 10.6 to 18.3 metres long.

11. Heat pump apparatus according to any one of claims 8 to 10, wherein the flat spaces of each conduit (194) have a height of 3 mm and a horizontal depth of at least 15.2 cm, and said adsorbent material (190) between said flat spaces has a thickness throughout of 6 mm.

12. Heat pump apparatus according to any one of claims 4 to 7, wherein said circulation means includes selectively reversible pumping means.

13. Heat pump apparatus according to claim 4, wherein said container of each system (120, 121) has substantially cylindrical sides (200) and comprises said condenser means (122) and said evaporator means (124), with additional conduit means (207) which circulates a liquid for cooling said condenser means (122) and heating said evaporator means (124) being incorporated in said sides.

14. Heat pump apparatus according to any one of the preceding claims, wherein the heat exchanger conduit means (125, 194) providing the thermal communioation between said adsorbent material (136, 190) and said heat exchange fluid is characterized by a longitudinal thermal conductivity substantially lower than its transverse thermal conductivity so that a propagating temperature front is propagated longitudinally through said heat exchanger conduit when said heat transfer fluid is conveyed therethrough.

15. Heat pump apparatus according to claim 14, wherein each heat exchanger conduit (125, 194) has a wall thickness of one millimetre or less.

16. Heat pump apparatus according to claim 14 or claim 15, wherein said adsorbent material (190) comprises slices disposed along the heat exchanger conduit (194) the slices being not more than ten millimetres thick and being, in close thermal contact with the heat exchanger conduit (194).

17. Heat pump apparatus according to any one of claims 1 to 5, in which the heat exchange conduit means comprises a metal conduit (194) for said fluid having an effective wall thickness of 0.5 millimetres or less, the volumetric thermal conductivity of said solid adsorbent (190) being substantially less than said conduit, said solid adsorbent (190) comprises slices disposed along said conduit (194) in immediate thermal communication therewith, the slices having a thickness of not more than ten millimetres, said conduit and said solid adsorbent thereon being so arranged that a heat transfer takes place between the fluid flowing in said conduit and said solid adsorbent such that when said fluid and said solid adsorbent have different initial temperatures these initial different temperatures are maintained across a propagating temperature front which is propagated along said solid adsorbent in the direction of fluid flow, the temperature of the solid adsorbent behind said front being about the same as said fluid behind said front, and the temperature of the solid adsorbent remaining at about its initial temperature forward of said front.

18. Heat pump apparatus according to claim 1, in which the heat exchange means connecting said adsorption systems comprises heating means arranged to heat said heat exchange fluid to an upper operating temperature connected between the heat exchange conduit means of said two adsorbent bed systems at one end thereof; cooling means arranged to cool said heat exchange fluid to a lower operating temperature connected between the other ends of said adsorbent bed heat exchange conduit means so that said heat exchange fluid can flow serially from said heating means, through one of said adsorbent bed conduit means, through said cooling means, through the other of said adsorbent bed conduit means and back to said heating means to define a heat transfer circuit; circulation means for alternately circulating said heat exchange fluid in one direction around the heat transfer circuit so that one of said adsorbent beds is cooled while the other of said adsorbent beds is heated, and in the opposite direction around the heat transfer circuit so that said other of said beds is cooled while said one of said beds is heated, the heat exchanged by said beds and said heat exchange fluid giving rise to a respective said propagating temperature front which propagates along each bed, the length of the temperature front being substantially less than that of the respective bed, such that the heated heat exchange fluid passing into the end of one of said conduit means heats said solid adsorbent bed associated therewith from an initial cool bed temperature while said bed cools the heat exchange fluid from the upper operating temperature down to about the initial cool bed temperature and with the cooled heat exchange fluid passing into the end of the other of said conduit means cooling said solid adsorbent bed associated therewith from an initial hot bed temperature at about the upper operating temperature while said bed heats the heat exchange fluid from the lower operating temperature up to about the initial hot bed temperature and control means operatively associated with said heat exchange fluid passing out of said beds and with said circulation means that causes said circulation means to reverse the circulation direction of said heat exchange fluid around said heat transfer circuit when either of the temperature wave fronts reaches that end of said bed from which said heat exchange fluid exits.

19. Heat pump apparatus according to any one of claims 1 to 8, wherein said conduit means (125) is composed of an alloy.

20. A process for heating and cooling an interior space using a low-grade heat source, comprising the steps of:

I. Providing first (120) and second (121) sealed enclosures each containing a working refrigerant, a solid adsorbent material (136) capable of adsorbing said refrigerant exothermally, and a conduit (125) which extends through the enclosure in thermal communication with said adsorbent material and which conducts a heat transfer fluid therethrough;

II. Providing a low-grade heat source (151) in thermal communication with said conduits of said enclosures;

III. Raising the vapour pressure of said refrigerant in the first (120) of said enclosures and desorbing the refrigerant from said adsorbent material therein using said heat transfer fluid heated by said low-grade heat source (151);

IV. Allowing refrigerant vapour in said first enclosure (120) to be received by a condenser (122) wherein said refrigerant vapour is condensed, and transferring said refrigerant's heat of condensation to said internal space or to the atmosphere;

V. Lowering the vapour pressure of said refrigerant in the second (121) of said enclosures by adsorbing said refrigerant in said adsorbent material, and transferring the heat of adsorption thereby generated to said first enclosure (120) in combination with heat from said low-grade heat source (151), via said heat transfer fluid in said conduits (125);

VI. Allowing refrigerant condensate in said second enclosure to be received by an evaporator (124) wherein said condensate is evaporated and transferring said refrigerant's heat of vaporization to said internal space or to atmosphere, and VII. Repeating steps III, IV, V and VI with said enclosures (120, 121) interchanged upon substantial completion of the respective adsorption and desorption cycles therein characterized in that, the solid adsorbent material (136) provided in Step I is so dimensioned and configured in relation to said conduit means (125) that the transmission of thermal energy by the adsorbent material in a direction transverse to the conduit means occurs more rapidly than the transmission of thermal energy by the adsorbent material along the conduit means so that during the desorption III in each enclosure the temperature of the adsorbent material is raised along a propagating temperature front which progresses through the materials as a result of the passage of said heat transfer fluid along the conduit means (125), the temperature front presenting a temperature transition, the temperature of said heat exchange fluid on the upstream side of the temperature front being significantly different from the temperature of said heat exchange fluid on the downstream side of the temperature front, whereby working refrigerant is desorbed from the adsorbent material along the propagating temperature front, and so that during the adsorption step V in each enclosure the temperature of the adsorbent material is lowered along a propagating temperature front which progresses through the material as a result of the passage of heat transfer fluid along the conduit means (125), the temperature front presenting a temperature transition, the temperature of said heat exchange fluid on the upstream side of the temperature front being significantly different from the temperature of said heat exchange fluid on the downstream side of the temperature front, whereby working refrigerant is adsorbed by the adsorbent material along the propagating temperature front, and the movement of working refrigerant into or out of the adsorbent material, due to adsorption or desorption respectively, advances through the adsorbent material in the same direction as the flow of heat exchange fluid along the conduit means.

21. A process according to claim 20, wherein said refrigerant is water.

22. A process according to claim 21 or claim 21, wherein said heat transfer fluid is substantially air.

23. A process according to claim 20 or claim 21, wherein said heat transfer fluid is a high temperature oil.

24. A process according to any one of claims 21 to 23, including the steps of:

(a) connecting the heat exchange conduits in series with each other so that heat transfer fluid flows serially through the conduits;

(b) heating the heat transfer fluid passing between the two adsorbent material beds at one end thereof to an upper operating temperature;

(c) cooling the heat transfer fluid passing between the other ends of the adsorbent beds to a lower operating temperature;

(d) circulating the heat transfer fluid serially through the heat exchange conduits so that the heat transfer fluid passes generally lengthwise of both adsorbent beds, the length of each adsorbent bed being substantially longer than the respective temperature front propagating therealong, such that the heated heat transfer fluid passing into the end of one bed heats the solid adsorbent bed from an initial cool bed temperature of about the lower operating temperature while the bed cools the heat transfer fluid from the upper operating temperature down to about the initial cool bed temperature and with the cooled heat transfer fluid passing into the end of the other bed cooling the solid adsorbent bed from an initial hot bed temperature of about the upper operating temperature while the bed heats the heat transfer fluid from the lower operating temperature up to about the initial hot bed temperature;

(e) when the exit temperature of the heat transfer fluid passing out of either of the beds shifts from the initial temperature of that bed by an amount less than about fifty percent (50%) of the difference between the initial bed temperature and inlet fluid temperature in step (b), changing the circulation of the heat transfer fluid so that the heated heat transfer fluid passes through the cooled bed and the cooled heat transfer fluid passes through the heated bed; and

(f) when the exit temperature of the heat transfer fluid passing out of either of the beds shifts from the initial temperature of that bed by said amount in step (c), changing the circulation of the heat transfer fluid to step (b) to cycle the beds between the upper and lower operating temperatures.

25. A process according to claim 24, wherein the heat transfer fluid is serially circulated through the adsorbent beds in a first direction lengthwise of the beds during step (b) and in the opposite direction during step (c).

26. A process according to claim 24, wherein the initial bed temperature of each of the adsorbent beds during heating is the temperature to which the bed is raised from the lower operating temperature by pressurizing the bed from evaporator pressure to condenser pressure and the initial bed temperature of each of the beds during cooling is the temperature to which the bed is lowered from the upper operating temperature by depressurizing the bed from condenser pressure to evaporator pressure.

**Revendications**

1. Dispositif de pompe à chaleur comprenant au moins deux systèmes d'adsorption solides-gaz hermétiquement fermés (120, 121) contenant chacun un réfrigérant de travail et des moyens échangeurs de chaleur (125, 126, 127, 131, 132) reliant lesdits systèmes et comprenant des moyens à conduites (125) reçus dans chaque système (120, 121) pour le passage d'un fluide échangeur de chaleur en relation d'échange de chaleur avec le matériau adsorbant (136), qui est en engagement avec lesdits moyens à conduites (125) de chaque système, ladite connexion desdits systèmes (120, 121) par lesdits moyens échangeurs de chaleur étant prévue pour que la chaleur générée pendant le cycle d'adsorption de l'un desdits systèmes soit transférée par l'intermédiaire desdits moyens échangeurs de chaleur et utilisée en tant que partie de l'énergie d'entrée nécessaire au cycle de désorption de l'autre desdits systèmes, le besoin en énergie externe étant ainsi fortement réduit pour ladite désorption, caractérisée en ce que lesdits moyens à conduites (125) sont agencés par rapport à l'un au moins desdits systèmes (120, 121) de manière à d'être en relation thermiquement conductrice immédiate avec ledit matériau adsorbant (136) qui est disposé le long desdits moyens à conduites et est dimensionné et configuré de manière que la transmission de l'énergie thermique par le matériau adsorbant dans une direction transversale à celle des moyens à conduites ait lieu plus rapidement que la transmission de l'énergie thermique par le matériau adsorbant le long des moyens à conduites, créant ainsi un front de température mobile qui avance dans le matériau adsorbant, pendant chaque cycle de fonctionnement, dans le sens de l'écoulement dudit fluide échangeur de chaleur passant par la conduite, le front de température mobile présentant une transition de température, la température du fluide échangeur de chaleur sur le côté amont du front de température étant nettement différente de la température du fluide échangeur de chaleur sur le côté aval du front de température, et le front de température mobile provoquant l'adsorption du réfrigérant de travail par le matériau adsorbant ou la désorption du réfrigérant de ce dernier, de manière telle que le mouvement du réfrigérant de travail qui pénètre dans ou sort du matériau adsorbant avance dans le matériau adsorbant dans le même sens que l'écoulement du fluide échangeur de chaleur dans les moyens à conduites.

2. Dispositif de pompe à chaleur selon la revendication 1, dans lequel les moyens à conduites (125) sont disposés d'une manière similaire par rapport à chacun desdits systèmes (120, 121) de manière que des fronts de température relativement forts se propagent sensiblement simultanément dans les deux systèmes.

3. Dispositif de pompe à chaleur selon la revendication 1 ou la revendication 2, dans lequel le matériau adsorbant (136) desdits systèmes (120, 121) est de la zéolite.

4. Dispositif de pompe à chaleur selon la revendication 2, dans lequel chaque système d'adsorption (120, 121) comprend un conteneur définissant un espace fermé hermétiquement (133) logeant ledit matériau adsorbant (136) en communication thermique avec lesdits moyens à conduites échangeuses de chaleur (125) qui s'étendent à travers ledit espace, un réfrigérant qui est adsorbé et désorbé par ledit matériau adsorbant en réponse à des modifications de température desdits moyens à conduites (125), des moyens condenseurs (122) pour condenser ledit réfrigérant, et des moyens évaporateurs (124) pour évaporer ledit réfrigérant, et le dispositif comprend en outre des moyens pour échanger la chaleur avec lesdits moyens condenseurs et indépendamment avec lesdits moyens évaporateurs de chaque système d'adsorption, lesdits moyens échangeurs de chaleur (125, 126, 127, 131, 132) comprenant des moyens de mise en circulation (152) pour amener sélectivement un fluide échangeur de chaleur à s'écouler dans lesdits moyens à conduites (125) de chaque système d'adsorption, et chaque système pouvant être utilisé alternativement pour des cycles de désorption et d'adsorption, cycle de désorption au cours duquel le réfrigérant est désorbé à partir dudit matériau adsorbant (136) le long dudit fort front de température qui se propage dans ledit matériau en réponse au passage dudit fluide échangeur de chaleur dans les moyens à conduites échangeuses de chaleur (125), la pression de vapeur dudit réfrigérant dans ledit espace (133) augmente et les moyens condenseurs (122) condensent la vapeur du réfrigérant qui est recueillie dans lesdits moyens évaporateurs (124), et cycle d'adsorption au cours duquel le fluide échangeur de chaleur s'écoule dans le sens inverse pour refroidir ledit matériau adsorbant (136) et provoquer une ré-adsorption dudit réfrigérant le long du front de température qui se propage dans le matériau grâce au fluide échangeur de chaleur, la pression de vapeur du réfrigérant dans ledit espace (133) diminue, et les moyens évaporateurs (124) évaporent la vapeur du réfrigérant.

5. Dispositif de pompe à chaleur selon la revendication 4, utilisant l'énergie d'une source de chaleur de faible puissance (151) pour obtenir le chauffage et le refroidissement de l'intérieur d'un bâtiment, ledit dispositif pouvant être actionné pour exécuter un cycle d'adsorption réversible de pompe à chaleur, lesdits moyens échangeurs de chaleur comprenant d'autres moyens à conduites (127, 131) reliant lesdits moyens à conduites (125) à travers les deux systèmes d'adsorption (120, 121) pour acheminer ledit fluide échangeur de chaleur qui a été chauffé pendant le cycle d'adsorption de l'un des systèmes pour être encore plus chauffé par la source de chaleur de faible puissance (151) et être reçu par l'autre système pour chauffer ledit matériau adsorbant pendant son cycle de désorption, lesdits autres moyens échangeurs de chaleur des systèmes coopérant pour fournir de la chaleur à l'intérieur d'un bâtiment à partir des moyens condenseurs pendant le cycle de désorption et pour refroidir ledit intérieur d'un bâtiment avec les moyens évaporateurs pendant le cycle d'adsorption, et des moyens de commande pour inverser le courant dudit fluide échangeur de chaleur lorsque le cycle d'adsorption d'un système et le cycle de désorption de l'autre système sont pratiquement terminés.

6. Dispositif de pompe à chaleur selon la revendication 5, dans lequel ladite source de chaleur de faible puissance (151) est l'énergie solaire.

7. Dispositif de pompe à chaleur selon la revendication 5, dans lequel ladite source de chaleur de faible puissance (151) est la flamme d'un gaz.

8. Dispositif de pompe à chaleur selon l'une quelconque des revendications précédentes, dans lequel les moyens à conduites (125) de chacun desdits systèmes d'adsorption (120, 121) sont un serpentin (194) qui présente des surfaces sensiblement plates entre spires (195), ledit matériau adsorbant (190) étant reçu entre lesdites surfaces sensiblement plates et étant en contact de surface contre surface avec ladite conduite (194).

9. Dispositif de pompe à chaleur selon la revendication 8, dans lequel ladite conduite (194) est en cuivre.

10. Dispositif de pompe à chaleur selon la revendication 8 ou la revendication 9, dans lequel ladite conduite (194) de chacun desdits systèmes d'adsorption (120, 121) a une longueur comprise entre 10,6 et 18,3 mètres.

11. Dispositif de pompe à chaleur selon l'une quelconque des revendications 8 à 10, dans lequel les espaces plats de chaque conduite (194) présentent une hauteur de 3 mm et une profondeur horizontale d'au moins 15,2 cm, et ledit matériau adsorbant (190) compris entre lesdits espaces plates présente une épaisseur de 6 mm sur toute sa surface.

12. Dispositif de pompe à chaleur selon l'une quelconque des revendications 4 à 7, dans lequel lesdits moyens de mise en circulation comprennent des moyens de pompage sélectivement réversibles.

13. Dispositif de pompe à chaleur selon la revendication 4, dans lequel ledit conteneur de chaque système (120, 121) possède des côtés sensiblement cylindriques (200) et comprend lesdits moyens condenseurs (122) et lesdits moyens évaporateurs (124), avec des moyens à conduites additionnels (207) faisant circuler un liquide pour refroidir lesdits moyens condenseurs (122), et chauffer lesdits moyens évaporateurs (124) qui sont incorporés dans lesdits côtés.

14. Dispositif de pompe à chaleur selon l'une quelconque des revendications précédentes, dans lequel les moyens à conduites échangeuses de chaleur (125, 194) établissent une communication thermique entre ledit matériau adsorbant (136, 190) et ledit fluide échangeur de chaleur sont caractérisés par une conductivité thermique longitudinale sensiblement inférieure à sa conductivité thermique transversale de manière qu'un front de température mobile se propage longitudinalement dans ladite conduite échangeuse de chaleur quand ledit fluide échangeur de chaleur est acheminé dans cette dernière.

15. Dispositif de pompe à chaleur selon la revendication 14, dans lequel chaque conduite échangeuse de chaleur (125, 194) présente une épaisseur de paroi de un millimètre ou moins.

16. Dispositif de pompe à chaleur selon la revendication 14 ou la revendication 15, dans lequel ledit matériau adsorbant (190) comprend des couches disposées le long de ladite conduite échangeuse de chaleur (194), les couches n'étant pas supérieures à dix millimètres en épaisseur et étant en contact thermique étroit avec la conduite échangeuse de chaleur (194).

17. Dispositif de pompe à chaleur selon l'une quelconque des revendications 1 à 5, dans lequel les moyens à conduites échangeuses de chaleur comprennent une conduite métallique (194) pour ledit fluide présentant une épaisseur de paroi de 0,5 mm ou moins, la conductivité thermique volumétrique dudit adsorbant solide (190) étant sensiblement plus faible que celle de ladite conduite, ledit adsorbant solide (190) comprenant des couches disposées le long de ladite conduite (194) en communication thermique immédiate avec elle, les couches présentant une épaisseur ne dépassant pas dix millimètres, ladite conduite et ledit adsorbant solide disposé sur elle étant agencés de manière qu'un transfert de chaleur ait lieu entre le fluide s'écoulant dans ladite conduite et ledit adsorbant solide de façon que lorsque ledit fluide et ledit adsorbant solide sont à des températures initiales différentes, ces températures initiales différentes soient maintenues dans ledit front de température mobile qui se propage le long dudit adsorbant solide dans la direction de l'écoulement du fluide, la température de l'adsorbant solide à l'arrière dudit front étant environ la même que celle dudit fluide à l'arrière dudit front, et la température de l'adsorbant solide restant environ à sa température initiale à l'avant dudit front.

18. Dispositif de pompe à chaleur selon la revendication 1, dans lequel les moyens échangeurs de chaleur reliant lesdits systèmes d'adsorption comprennent des moyens de chauffage agencés pour chauffer ledit fluide échangeur de chaleur jusqu'à une température supérieure de fonctionnement entre les moyens à conduitess échangeuses de chaleur desdits deux systèmes à lit adsorbant à l'une de leurs extrémités; des moyens de refroidissement agencés pour refroidir ledit fluide échangeur de chaleur jusqu'à une température de fonctionnement inférieure reliés entre les autres extrémités desdits moyens à conduitess échangeuses de chaleur à lit adsorbant de manière que ledit fluide échangeur de chaleur puisse s'écouler en série à partir desdits moyens de chauffage par l'un desdits moyens à conduites à lit adsorbant, à travers lesdits moyens de refroidissement en passant par l'autre desdits moyens à conduites à lit adsorbant et en retour vers lesdits moyens de chauffage pour définir un circuit de transfert de chaleur; des moyens de mise en circulation pour mettre alternativement en circulation ledit fluide échangeur de chaleur dans un sens dans le circuit de transfert de chaleur de manière que l'un desdits lits adsorbants soit refroidi alors que l'autre desdits lits adsorbants est chauffé, et dans le sens inverse dans le circuit de transfert de chaleur de manière que l'autre desdits lits adsorbants soit refroidi alors que ledit premier desdits lits est chauffé, la chaleur échangée par lesdits lits et ledit fluide échangeur de chaleur donnant naissance à un front de température mobile qui se propage le long de chaque lit, la longueur du front de température étant sensiblement inférieure à celle du lit respectif, de sorte que le fluide échangeur de chaleur qui parvient dans l'extrémité de l'un desdits moyens à conduites chauffe ledit lit adsorbant solide qui lui est associé à partir d'une température initiale de lit froid alors que ledit lit refroidit le fluide échangeur de chaleur depuis sa température de fonctionnement supérieure jusqu'à environ la température initiale du lit froid et alors que le fluide échangeur de chaleur refroidi passe par l'extrémité de l'autre desdits moyens à conduites en refroidissant ledit lit adsorbant solide qui lui est associé depuis une température initiale de lit chaud jusqu'à environ la température supérieure de fonctionnement alors que ledit lit chauffe le fluide échangeur de chaleur depuis la température de fonctionnement inférieure jusqu'à environ la température initiale de lit chaud, et des moyens de commande associés fonctionnellement avec ledit fluide échangeur de chaleur qui sort desdits lits et avec lesdits moyens de mise en circulation pour inverser le sens de la circulation dudit fluide échangeur de chaleur dans ledit circuit de transfert de chaleur quand l'un ou l'autre des fronts d'onde de température atteint l'extrémité dudit lit par laquelle ledit fluide échangeur de chaleur sort.

19. Dispositif de pompe à chaleur selon l'une quelconque des revendications 1 à 8, dans lequel lesdits moyens à conduites (125) sont constitués en un alliage.

20. Procédé pour chauffer et refroidir un espace intérieur en utilisant une source de chaleur de faible puissance, comprenant les étapes consistant à:

I. fournir des première (120) et seconde (121) enceintes contenant chacune un réfrigérant de travail, un matériau adsorbant solide (136) capable d'adsorber exothermiquement ledit réfrigérant, et une conduite (125) qui traverse l'enceinte en étant en communication thermique avec ledit matériau adsorbant et dans laquelle passe un fluide échangeur de chaleur;

II. fournir une source de chaleur de faible puissance (151) en communication thermique avec lesdites conduites desdites enceintes;

III. faire monter la pression de la vapeur dudit réfrigérant dans la première (120) desdites enceintes et désorber le réfrigérant dudit matériau adsorbant qu'elle contient en utilisant ledit fluide de transfert de chaleur chauffé par ladite source de chaleur de faible puissance (151);

IV. permettre à la vapeur du réfrigérant dans ladite première enceinte (120) d'être reçue par un condenseur (122) dans lequel ladite vapeur du réfrigérant est condensée, et transférer la chaleur de condensation dudit réfrigérant vers ledit espace interne ou vers l'atmosphère;

V. abaisser la pression de la vapeur dudit réfrigérant dans la seconde (121) desdites enceintes en adsorbant ledit réfrigérant dans ledit matériau adsorbant, et transférer la chaleur de l'adsorption ainsi générée vers ladite première enceinte (120) en combinaison avec la chaleur provenant de ladite source de chaleur de faible puissance (151), par l'intermédiaire dudit fluide échangeur de chaleur dans lesdites conduites (125);

VI. permettre au condensat du réfrigérant dans ladite seconde enceinte d'être reçu par un évaporateur (124) dans lequel ledit condensat est évaporé, et transférer la chaleur de vaporisation dudit réfrigérant vers ledit espace interne ou vers l'atmosphère, et

VII. répéter les étapes III, IV, V et VI alors que lesdites enceintes (120, 121) sont interchangées lorsque les cycles respectifs d'adsorption et désorption qui s'y déroulent sont sensiblement terminés, caractérisé en ce que le matériau adsorbant solide (136) prévu à l'étape I est dimensionné et configuré en relation avec lesdits moyens à conduites (125) pour que la transmission de l'énergie thermique par le matériau adsorbant dans une direction transversale auxdits moyens à conduites se fasse plus rapidement que la transmission de l'énergie thermique par le matériau adsorbant le long des moyens à conduites, de sorte que pendant l'étape de désorption III la température du matériau adsorbant dans chaque enceinte soit élevée le long d'un front de température mobile qui progresse dans le matériau du fait du passage dudit fluide échangeur de chaleur dans lesdits moyens à conduites (125), le front de température présentant une transition de température, la température dudit fluide échangeur de chaleur sur le côté amont du front de température étant sensiblement différente de la température dudit fluide échangeur de chaleur sur le côté aval du front de température, moyennant quoi le réfrigérant de travail est désorbé à partir du matériau adsorbant le long du front de température qui se propage, et de sorte que pendant l'étape d'adsorption V la température du matériau adsorbant dans chaque enceinte soit abaissée le long d'un front de température mobile qui progresse dans le matériau du fait du passage du fluide échangeur de chaleur dans les moyens à conduites (125), le front de température présentant une transition de température, la température dudit fluide échangeur de chaleur sur le côté amont du front de température étant sensiblement différente de la température dudit fluide échangeur de chaleur sur le côté aval du front de température, le réfrigérant de travail étant ainsi adsorbé par le matériau adsorbant le long du front de température qui se propage, et le mouvement du réfrigérant de travail entrant et sortant du matériau adsorbant, en raison de l'adsorption ou de la désorption respectivement, avance dans le matériau adsorbant dans la même direction que le courant du fluide échangeur de chaleur dans les moyens à conduites.

21. Procédé selon la revendication 19, dans lequel ledit réfrigérant est de l'eau.

22. Procédé selon la revendication 19 ou la revendication 20, dans lequel ledit fluide de transfert de chaleur est essentiellement de l'air.

23. Procédé selon la revendication 19 ou la revendication 20, dans lequel ledit fluide de transfert de chaleur est de l'huile à température élevée.

24. Procédé selon l'une quelconque des revendications 19 à 22, comprenant les étapes consistant à:
    (a) relier les conduites échangeuses de chaleur en série les unes avec les autres de manière que le fluide de transfert de chaleur s'écoule en série dans lesdites conduites;
    (b) chauffer le fluide de transfert de chaleur qui passe entre les deux lits de matériau adsorbant à l'une de leurs extrémités à une température de fonctionnement supérieure;
    (c) refroidir le fluide de transfert de chaleur qui passe entre les autres extrémités des lits adsorbants jusqu'à une température de fonctionnement inférieure;
    (d) faire circuler le fluide de transfert de chaleur en série par les conduites échangeuses de chaleur de manière que le fluide de transfert de chaleur passe généralement dans le sens de la longueur des deux lits adsorbants, la longueur de chaque lit adsorbant étant sensiblement plus longue que le front de température respectif qui se propage le long de chacun d'eux, de manière que le fluide de transfert de chaleur qui entre par l'extrémité d'un lit chauffe le lit adsorbant solide depuis une température initiale de lit froid qui est environ la température de fonctionnement inférieure alors que le lit refroidit le fluide de transfert de chaleur depuis la température de fonctionnement supérieure jusqu'à environ la température initiale de lit froid, et le fluide de transfert de chaleur refroidi entrant par l'extrémité de l'autre lit en refroidissant le lit adsorbant solide depuis une température initiale de lit chaud à environ la température de fonctionnement supérieure alors que le lit chauffe le fluide de transfert de chaleur depuis la température de fonctionnement inférieure jusqu'à environ la température initiale de lit chaud;
    (e) quand la température de sortie du fluide de transfert de chaleur qui sort de l'un ou l'autre des lits se modifie par rapport à la température initiale du lit concerné d'une quantité qui est inférieure à environ cinquante pour cent (50%) de la différence entre la température initiale du lit et la température d'entrée du fluide à l'étape (b), changer la circulation du fluide de transfert de chaleur de manière que ce fluide de transfert de chaleur chauffé passe par le lit refroidi et que le fluide de transfert de chaleur refroidi passe par le lit chauffé; et
    (f) quand la température de sortie du fluide de transfert qui sort de l'un ou l'autre des lits se modifie par rapport à la température initiale du lit concerné de ladite quantité indiquée à l'étape (c), changer la circulation du fluide de transfert de chaleur à celle de l'étape (b) pour cycler les lits entre les températures de fonctionnement supérieure et inférieure.

25. Procédé selon la revendication 24, dans lequel le fluide de transfert de chaleur est mis en circulation en série par les lits adsorbants dans un premier sens dans la longueur des lits pendant l'étape (b) et dans le sens opposé pendant l'étape (c).

26. Procédé selon la revendication 24, dans lequel la température initiale de chacun des lits adsorbants pendant le chauffage est la température à laquelle chacun des lits est monté depuis la température de fonctionnement inférieure par pressurisation du lit depuis la pression de l'évaporateur à la pression du condenseur et la température initiale de chacun des lits pendant le refroidissement est la température à laquelle le lit est abaissé depuis la température de fonctionnement supérieure par dépressurisation du lit depuis la pression du condenseur jusqu'à la pression de l'évaporateur.

**Ansprüche**

1. Wärmepumpenanlage bestehend aus mindestens zwei getrennten hermetisch abgedichteten gasadsorbierenden Feststoffsystemem (120, 121), wovon jedes ein Arbeitskältemittel sowie Wärmetauscherelemente (125, 126, 127, 131, 132) enthält, über die die genannten Systeme gekoppelt sind, sowie in den Systemen (120, 121) angeordnete Leitungen (125), durch die der Wärmeträger unter Wärmeaustausch mit dem adsorbierenden Material (136) geführt wird, das dabei in Kontakt mit diesen Leitungen (125) jedes Systems steht, wobei die Kopplung dieser Systeme (120, 121) durch den genannten Wärmeträger so ausgeführt ist, daß die während des Adsorptionszyklus eines der Systeme erzeugte Wärme über diese Wärmetauscherelemente übertragen und zu der für den Desorptionszyklus des jeweils anderen Systems erforderlichen Eingangsenergie herangezogen wird, so daß der Bedarf an externer Energiezufuhr für diesen Desorptionszyklus deutlich verringert werden kann, dadurch gekennzeichnet, daß die Leitungen (125) bezüglich mindestens eines dieser Systeme (120, 121) in wärmeleitfähiger Weise relativ zu diesem adsorbierenden Material (136) angeordnet sind, welches entlang der Leitungen angeordnet und so dimensioniert und konfiguriert ist, daß die Übertragung der Wärmeenergie durch das adsorbierende Material in Querrichtung zu den Leitungen rascher erfolgt als die Übertragung der Wärmeenergie durch das absorbierende Material in Längsrichtung der Leitungen, so daß sich eine mit jedem Arbeitszyklus durch das adsorbierende Material in Strömungsrichtung dieses Arbeitsmediums durch die Leitungen fortschreitende Temperaturfront ausbildet, wobei diese fortschreitende Temperaturfront einen Bereich mit Wärmegefälle darstellt, da sich die Temperatur des Wärmeträgers an der Vorderseite der Temperaturfront erheblich von der Temperatur an der Rückseite der Temperaturfront unterscheidet, wodurch diese fortschreitende Temperaturfront das Arbeitskältemittel zur Adsorption bzw. Desorption am bzw. vom adsorbierenden Ma terial in der Weise veranlaßt, daß das Kältemittel das adsorbierende Material in derselben Richtung durchströmt wie der Wärmeträger die Leitungen.

2. Wärmepumpenanlage gemäß Anspruch 1, bei der die Leitungen (125) relativ zu jedem der Systeme (120, 121) in ähnlicher Weise angeordnet sind, so daß verhältnismäßig scharf definierte Temperaturfronten im wesentlichen gleichzeitig durch beide Systeme fortschreiten.

3. Wärmepumpenanlage gemäß Anspruch 1 oder 2, bei der als adsorbierendes Material (136) in den Systemen (120, 121) Zeolith verwendet wird.

4. Wärmepumpenanlage gemäß Anspruch 2, bei der jedes Adsorptionssystem (120, 121) einen als hermetisch abgedichteten Raum (133) ausgeführten Behälter mit adsorbierendem Material (136) umfaßt, das mit den durch diesen Raum geführten Leitungen wärmeleitend in Kontakt steht, sowie ein Kältemittel, das durch dieses adsorbierende Material entsprechend den in diesen Leitungen (125) stattfindenden Temperaturwechseln adsorbiert bzw. desorbiert wird, einen Kondensator (122) zur Kondensation des Kältemittels sowie einen Verdampfer (124) zur Verdampfung des Kältemittels und wobei die Anlage außerdem Einrichtungen zum Wärmeaustausch mit diesem Kondensator und unabhängig davon mit diesem Verdampfer jedes Adsorptionssystems umfaßt und wobei die Wärmetauscherelemente (125, 126, 127, 131, 132) mit Umwälzeinrichtungen (152) versehen sind, mittels derer ein Wärmeträger selektiv durch die Leitungen (125) jedes Adsorptionssystems geleitet werden kann und wobei jedes System abwechselnd im Desorptions- und Adsorptionsmodus betrieben werden kann, so daß im Desorptionszyklus das Kältemittel von diesem Adsorptionsmaterial (136) entlang dieser scharf definierten Temperaturfront desorbiert wird, die in diesem Material entsprechend der Strömungsrichtung dieses Wärmeträgers durch die Wärmetauscherelemente (125) fortschreitet, wobei der Dampfdruck des Kältemittels in diesem Raum (133) ansteigt und der Kondensator (122) den im Verdampfer (124) gesammelten Dampf des Kältemittels kondensiert, während im Adsorptionszyklus die Strömungsrichtung des Wärmeträgers zur Kühlung dieses adsorbierenden Materials (136) umgekehrt wird, wobei der Wärmeträger die erneute Adsorption dieses Kältemittels entlang der im Material fortschreitenden Temperaturfront bewirkt, der Dampfdruck dieses Kältemittels in diesem Raum (133) abnimmt und der Verdampfer (124) das Kältemittel in Dampf überführt.

5. Wärmepumpenanlage gemäß Anspruch 4, die die Energie einer niedrigtemperierten Wärmequelle (151) zur Heizung und Kühlung eines Gebäudes nutzt und die so betrieben werden kann, daß die Wärmepumpe reversible Zyklen ausführt und wobei die Wärmetauscherelemente weitere Leitungen (125) durch die beiden Adsorptionssysteme (120, 121) für den Transport des Wärmeträgers aufweisen, der im Adsorptionszyklus erwärmt und mittels der niedrigtemperierten Wärmequelle (151) weiter aufgeheizt wird und in das zweite System eingeleitet wird, so daß im Desorptionszyklus das adsorbierende Material erwärmt wird, wodurch die Wärmetauscherelemente der Systeme gemeinsam Wärme aus dem Kondensator in das Innere eines Gebäudes liefern, während im Adsorptionszyklus das Innere eines Gebäudes mit Hilfe des Verdampfers gekühlt wird, und wobei Steuereinrichtungen für die Strömungsumkehr des Wärmeträgers nach dem Ablauf des Adsorptionszylus des einen Systems sowie des Desorptionszyklus des anderen Systems sorgen.

6. Wärmepumpenanlage gemäß Anspruch 5, wobei es sich bei der niedrigtemperierten Wärmequelle (151) um gespeicherte Sonnenenergie handelt.

7. Wärmepumpenanlage gemäß Anspruch 5, wobei es sich bei dem niedrigtemperierten Wärmequelle (151) um eine Gasflamme handelt.

8. Wärmepumpenanlage gemäß einem der vorstehenden Ansprüche, bei der die Leitungen (125) in jedem dieser Adsorptionssysteme (120, 121) in Form von Schlangen (194) ausgebildet sind, die zwischen den Umlenkkrümmungen (195) hinreichend große flache Oberflächen aufweisen und das adsorbierende Material zwischen diesen im wesentlichen flachen Bereichen in unmittelbarem Kontakt mit der Oberfläche dieser Schlange (194) steht.

9. Wärmepumpenanlage gemäß, Anspruch 8, wobei diese Schlange (194) aus Kupfer besteht.

10. Wärmepumpenanlage gemäß Anspruch 8 oder 9, wobei diese Schlange (194) in jedem dieser Adsorptionssysteme (120, 121) eine Länge zwischen 10,6 und 18,3 m aufweist.

11. Wärmepumpenanlage gemäß einem der Ansprüche 8 bis 10, wobei die flachen Abschnitte jeder Schlange (194) eine Höhe von 3 mm und eine Tiefe in waagrechter Richtung von mindestens 15,2 cm aufweisen und die Dicke dieses zwischen den flachen Abschnitten angeordneten adsorbierenden Materials (190) konstant 6 mm beträgt.

12. Wärmepumpenanlage gemäß einem der Ansprüche 4 bis 7, wobei diese Umwälzeinrichtungen selektiv umschaltbare Pumpen umfassen.

13. Wärmepumpenanlage gemäß Anspruch 4, wobei der Behälter jedes der Systeme (120, 121) eine im wesentlichen zylindrische Wandung (200) aufweist und den Kondensator (122) sowie den Verdampfer (124) mit zusätzlichen Leitungen (207) beinhaltet, durch die ein in die Wandung eingeleitetes Medium zur Kühlung des Kondensators (122) und Erwärmung des Verdampfers (124) zirkuliert.

14. Wärmepumpenanlage gemäß einem der vorstehenden Ansprüche, bei der die die Wärmeübertragung zwischen dem adsorbierenden Material (136, 190) und dem Wärmeträger bewirkenden Wärmetauscherelemente (125, 190) durch eine wesentlich geringere Wärmeleitfähigkeit in Längsrichtung als in Querrichtung gekennzeichnet sind, so daß das Wärmetauscherelement von einer in Längsrichtung fortschreitenden Temperaturfront durchlaufen wird, wenn es vom Wärmeträger durchströmt wird.

15. Wärmepumpenanlage gemäß Anspruch 14, wobei jedes der Wärmetauscherelemente (125, 194) eine Wanddicke von einem Millimeter oder weniger aufweist.

16. Wärmepumpenanlage gemäß Anspruch 14 oder 15 mit entlang dem Wärmetauscherelement (194) in Scheiben angeordnetem adsorbierenden Material (190), wobei die Dicke der Scheiben nicht mehr als zehn Millimeter betragen darf und diese Scheiben in engem thermischem Kontakt mit den Wärmetauscherelementen (194) stehen.

17. Wärmepumpenanlage gemäß einem der Ansprüche 1 bis 5, bei der die Wärmetauscherelemente (194) ein Metallprofil (194) zur Führung dieses Wärmeträgers mit einer effektiven Wanddicke von 0,5 Millimetern oder darunter bestehen, wobei die Wärmeleitfähigkeit dieses festen Adsorbens (190) erheblich unterhalb derjenigen des Metallprofils liegt und wobei dieses feste Adsorbens (190) in Form von Scheiben mit einer Dicke von nicht mehr als zehn Millimetern und in engem thermischem Kontakt entlang dieses Profils (194) angeordnet ist und bei der dieses Metallprofil und das mit ihm in Kontakt befindliche feste Adsorbens so angeordnet sind, daß bei Durchströmung des Metallprofils mit dem Wärmeträger ein Wärmeaustausch zwischen dem Wärmeträger und dem festen Adsorbens in der Weise stattfindet, daß im Falle verschiedener Ausgangstemperaturen des Wärmeträgers und des festen Adsorbens diese Temperaturdifferenz in Richtung der Wärmeträgerströmung über eine entlang des festen Adsorbens fortschreitende Temperaturfront bestehen bleibt, wobei die Temperatur des festen Adsorbens hinter dieser Front etwa gleich ist der Temperatur des Wärmeträgers hinter dieser Front, und die Temperatur des festens Adsorbens vor der Temperaturfront etwa auf dem Niveau der Ausgangstemperatur gehalten wird.

18. Wärmepumpenanlage gemäß Anspruch 1, bei der die die Adsorptionssysteme verbindenden Wärmetauscherelemente Heizeinrichtungen zur Erwärmung des Wärmeträgers auf eine obere Betriebstemperatur umfassen, die zwischen den Wärmetauscherelementen an einem Ende der beiden Adsorbensschichtsysteme angeschlossen sind; weiterhin Kühleinrichtungen zur Abkühlung dieses Wärmeträgers auf eine untere Betriebstemperatur, die zwischen den anderen Enden des Adsorbensschicht-/Wärmetauscherelementsystems angeschlossen sind, so daß der Wärmeträger nach Verlassen der Heizeinrichtungen nacheinander eines der Adsorbensschicht-/ Wärmetauschersysteme, die Kühleinrichtungen, das zweite Adsorbensschicht-/Wärmetauschersystem durchfließt und wieder zu den Heizeinrichtungen geführt wird und so einen Wärmeübertragungskreis definiert; weiterhin Umwälzeinrichtungen, mittels derer der Wärmeträger mit wechselnder Strömungsrichtung durch den Wärmeübertragungskreis zirkuliert, so daß eine der Absorbensschichten gekühlt und die jeweils andere erwärmt wird, wobei der bei jedem Richtungswechsel stattfindende Wärmeaustausch zwischen den Adsorbensschichten und dem Wärmeträger den Aufbei einer entlang jeder Schicht fortschreitenden Temperaturfront bewirkt, deren Länge erheblich kürzer ist als diejenige der jeweiligen Adsorbensschicht, so daß der in das Ende eines der Wärmetauscherelemente einströmende erwärmte Wärmeträger die zugehörige feste Adsorbensschicht mit Kühltemperatur erwärmt, wobei diese Adsorbensschicht gleichzeitig den Wärmeträger von der oberen Betriebstemperatur auf etwa Kühltemperatur der Adsorbensschicht herun terkühlt, und der in das Ende des anderen Wärmetauscherelements einströmende abgekühlte Wärmeträger die zugehörige feste Adsorbensschicht von einer Ausgangstemperatur im Bereich der oberen Betriebstemperatur herunterkühlt, wobei diese Schicht gleichzeitig den Wärmeträger von der unteren Betriebstemperatur auf die Ausgangstemperatur der Schicht aufheizt; weiterhin sind auf den die jeweilige Adsorbensschicht verlassenden Wärmeträger ansprechende Steuereinrichtungen sowie Umwälzeinrichtungen vorgesehen, die aufgrund des Eingreifens der Steuereinrichtungen die jeweilige Strömungsrichtung des Wärmeträgers durch den Wärmeübertragungskreis umkehren, sobald eine der Temperaturfronten das Ende der Schicht erreicht hat, die dieser Wärmeträger verläßt.

19. Wärmepumpenanlage gemäß einem der Ansprüche 1 bis 8, bei der diese Wärmetauscherelemente (125) aus einer Legierung bestehen.

20. Verfahren zum Heizen und Kühlen eines Innenraums unter Verwendung einer niedrigtemperierten Wärmequelle, das folgende Stufen umfaßt:

I. Ein erstes (120) und zweites (121) abgedichtetes Gehäuse, die jeweils ein Kältemittel, ein festes Adsorbens (136) zur exothermen Adsorption dieses Kältemittels sowie eine sich durch das Gehäuse erstreckende Leitung (125) im Wärmeaustausch mit dem adsorbierenden Material und den Wärmeträger führend enthalten;

II. Eine niedrigtemperierte Wärmequelle (151), die sich mit den Leitungen der Gehäuse im Wärmeaustausch befindet;

III. Erhöhung des Dampfdrucks des Kältemittels im ersten (120) dieser Gehäuse und Desorption des Kältemittels vom darin befindlichen adsorbierenden Material unter Verwen dung des mittels der Wärmequelle (151) erwärmten Wärmeträgers;

IV. Einleitung des Kältemitteldampfes im ersten Gehäuse (120) in einen Kondensator (122), in dem die Kondensation des Kältemittels erfolgt, und Abgabe der Kondensationswärme an diesen Innenraum oder an die Atmosphäre;

V. Verringerung des Dampfdrucks des Kältemittels im zweiten (121) dieser Gehäuse durch Adsorption des Kältemittels im adsorbierenden Material und Abgabe dieser so entstandenen Adsorptionswärme sowie der von der niedrigtemperierten Wärmequelle (151) gelieferten Wärme über den Wärmeträger in den Leitungen (125) an dieses erste Gehäuse (120);

VI. Einleitung des Kältemittelkondensats des zweiten Gehäuses in einen Verdampfer (124), in dem dieses Kondensat verdampft wird und Abgabe der Verdampfungswärme an diesen Innenraum oder an die Atmosphäre; und

VII. Wiederholung der Schritte III, IV, V und VI mit diesen Gehäusen (120, 121), die nach Abschluß des jeweiligen Adsorptions- und Desorptionszyklus die Funktion des jeweils anderen Gehäuses übernehmen, dadurch gekennzeichnet, daß das gemäß Schritt I vorgesehene feste adsorbierende Material bezüglich dieser Wärmetauscherelemente (125) so dimensioniert und konfiguriert ist, daß die Übertragung der Wärmeenergie durch das adsorbierende Material in Querrichtung zu den Wärmetauscherelementen rascher erfolgt als die Übertragung der Wärmeenergie durch das adsorbierende Material in Längsrichtung der Wärmetauscherelemente, wodurch während des Desorptionsschrittes III in jedem Gehäuse die Temperatur des adsorbierenden Materials entlang einer durch das Material fortschreitenden Temperaturfront aufgrund der Strömung des Wärmeträgers durch die Leitung (125) ansteigt, wobei diese Temperaturfront einen Bereich mit Wärmegefälle darstellt, da sich die Temperatur des Wärmeträgers an der Vorderseite der Temperaturfront erheblich von der Temperatur an der Rückseite der Temperaturfront unterscheidet, wodurch das Arbeitskältemittel vom adsorbierenden Material entlang der fortschreitenden Temperaturfront desorbiert wird und während des Adsorptionsschrittes V in jedem Gehäuse die Temperatur des adsorbierenden Materials entlang einer durch dieses Material fortschreitenden Temperaturfront aufgrund der Durchströmung der Leitungen (125) mit dem Wärmeträger absinkt, dabei stellt diese Temperaturfront einen Bereich mit Wärmegefälle dar, da sich die Temperatur des Wärmeträgers an der Vorderseite der Temperaturfront erheblich von der Temperatur an der Rückseite der Temperaturfront unterscheidet, so daß das Kältemittel vom adsorbierenden Material entlang der fortschreitenden Temperaturfront adsorbiert wird und die Strömung des Kältemittels in das oder aus dem adsorbierenden Material aufgrund der Adsorption bzw. Desorption in derselben Richtung erfolgt wie die Strömung des Wärmeträgers durch die Wärmetauscherelemente.

21. Verfahren gemäß Anspruch 19, bei dem als Kältemittel Wasser verwendet wird.

22. Verfahren gemäß Anspruch 19 oder 20, bei dem als Wärmeträger im wesentlichen Luft verwendet wird.

23. Verfahren gemäß Anspruch 19 oder 20, bei dem als Wärmeträger ein Hochtemperaturöl verwendet wird.

24. Verfahren gemäß einem der Ansprüche 19 bis 22, das folgende Schritte beinhaltet:

(a) Kopplung der Wärmetauscherelemente in Reihe, so daß der Wärmeträger sie nacheinander durchströmt;

(b) Erwärmung des zwischen zwei Adsorbensschichten durchfließenden Wärmeträgers an einem ihrer Enden auf eine obere Betriebstemperatur;

(c) Kühlung des zwischen den anderen Enden der Adsorptionsschichten durchfließenden Wärmeträgers auf eine untere Betriebstemperatur;

(d) Zirkulation des Wärmeträgers nacheinander durch die Wärmetauscherelemente, so daß der Wärmeträger im wesentlichen in Längsrichtung der beiden Adsorptionsschichten geführt wird, wobei die Länge jeder Adsorptionsschicht erheblich größer ist als die Länge der sich entlang der jeweiligen Schicht fortpflanzenden Temperaturfront, so daß der in ein Ende einer Schicht eintretende erwärmte Wärmeträger die feste Adsorptionsschicht von einer Ausgangstemperatur etwa im Bereich der unteren Betriebstemperatur erwärmt, während die Schicht den Wärmeträger von der oberen Betriebstemperatur auf etwa die Ausgangstemperatur der kalten Schicht herunterkühlt und so daß der in das Ende der anderen Schicht eintretende abgekühlte Wärmeträger die feste adsorbierende Schicht von einer Ausgangstemperatur im Bereich der oberen Betriebstemperatur herunterkühlt, während diese Schicht gleichzeitig den Wärmeträger von der unteren Betriebstemperatur auf etwa die Ausgangstemperatur der heißen Schicht aufheizt;

(e) wenn die Austrittstemperatur des Wärmeträgers aus einer der Schichten um weniger als fünfzig Prozent (50%) der Differenz zwischen der Ausgangstemperatur der Schicht und der Eintrittstemperatur des Wärmeträgers gemäß Schritt (b) abweicht und so die Zirkulationsrichtung des Wärmeträgers umkehrt, so daß der aufgeheizte Wärmeträger durch die gekühlte Schicht und der heruntergekühlte Wärmeträger durch die aufgeheizte Schicht geführt wird; und

(f) wenn die Austrittstemperatur des Wärmeträgers aus einer der Schichten von der Ausgangstemperatur der betreffenden Schicht um den Betrag gemäß Schritt (c) abweicht und so die Zirkulationsrichtung des Wärmeträgers gemäß Schritt (b) umkehrt, so daß die Temperaturen der beiden Schichten zwischen oberer und unterer Betriebstemperatur zyklisch wechseln.

25. Verfahren gemäß Anspruch 24, wobei der Wärmeträger in Schritt (b) nacheinander durch die adsorbierenden Schichten in einer ersten Richtung entlang der Schichten und während Schritt (c) in Gegenrichtung geführt wird.

26. Verfahren gemäß Anspruch 24, bei dem die Ausgangstemperatur jeder der adsorbierenden Schichten während der Aufheizphase derjenigen Temperatur entspricht, auf die die Schicht aus einer unteren Betriebstemperatur gebracht wird, indem der auf die Schicht einwirkende Druck von Verdampferdruck auf Kondensatordruck aufgebaut wird, und bei dem die Ausgangstemperatur jeder der adsorbierenden Schichten während der Abkühlphase derjenigen Temperatur entspricht, auf die die Schicht aus einer oberen Betriebstemperatur gebracht wird, indem eine Druckentlastung der Schicht von Kondensatordruck auf Verdampferdruck erfolgt.

Fig. 1

Fig. 2

Fig. 3

Simplified Concept of
Zeolite Cycle

Fig. 4

Typical Isosteres for
Zeolite & Water Vapor

Equilibrium $H_2O$ Loading:
Lb. of adsorbed $H_2O$
100 lb. of activated Linde molecular
sieve type 13X
Activation conditions
350°C and <10 Microns Hg

31

Fig. 5

Anticipated Temperature-Time Profile of Conventional Zeolite Heat Exchanger

Fig. 6

Anticipated Temperature-Time Profile of New Zeolite Heat Exchanger

## Fig. 7

Solutions to Heat Flow
Equation for Zeolites

$$\frac{T}{T_o} = erfc \frac{X}{2\sqrt{KT}}$$

## Fig. 8

Fig. 11

Fig. 9

Fig. 12

Fig. 13

Fig. 10

22-52°F 17-47°F

Fig. 14

Flue Heat Exchanger ~170

132 126

Heat Exch-anger    Heat Exch-anger

160-400°F    95°F

171    172

Zeolite Cycle

120    122    121

Cond. 100°F    Cond. 100°F

Zeolite Generator    Evap. 17-47°F    Evap. 17-47°F    Zeolite Adsorber

124

400°F    151    100-400°F

131    127

130

Gas Burner

Fig. 15

Heat Exchanger Length

100%
90%
80%
70%
60%
50%
40%
30%
20%
10%
0%

10ft    30ft    50ft    70ft

2    4    6    8    10    12    14    16    18 minutes

Normalized Temperature

Liquid Fluid ————
Gaseous Fluid - - - - - -

## Fig. 16

## Fig. 17

Fig. 18

Fig. 20

Gas/Fluid flow

Fig. 19

Gas/Fluid flow

Fig. 21

194

Fig. 24

Fig. 23

Fig. 28

Heater

Cooler

Fig. 22

Fig. 25

Fig. 26

Fig. 27